(19) **Europäisches Patentamt / European Patent Office / Office européen des brevets**

(11) **EP 4 542 262 A1**

(12) **EUROPEAN PATENT APPLICATION**

(43) Date of publication:
23.04.2025  Bulletin 2025/17

(21) Application number: 24185523.8

(22) Date of filing: 28.06.2024

(51) International Patent Classification (IPC):
**G01S 19/24** (2010.01)   **G01S 19/26** (2010.01)
**G01S 19/25** (2010.01)   **G01S 19/29** (2010.01)

(52) Cooperative Patent Classification (CPC):
**G01S 19/26; G01S 19/246;** G01S 19/25;
G01S 19/29

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.10.2023  EP 23204225
17.10.2023  EP 23204226

(71) Applicant: **u-blox AG**
**8800 Thalwil (CH)**

(72) Inventors:
• **CHENG, Zhenlan**
**Thalwil (CH)**
• **KOEHLER, Maxim**
**Thalwil (CH)**

(74) Representative: **Elkington and Fife LLP**
**Prospect House**
**8 Pembroke Road**
**Sevenoaks, Kent TN13 1XR (GB)**

(54)  **PROCESSING A GNSS SIGNAL AND WIPING OFF A DATA BIT BASED ON DOPPLER ESTIMATES**

(57)    A method and apparatus are provided for processing a GNSS signal received at a receiver. The method comprises mixing a local carrier signal with samples of the GNSS signal to generate carrier-free signal samples. It further comprises: correlating the carrier-free signal samples with a local spreading code to generate a complex-valued correlation result; and wiping off at least one of the data bits from the complex-valued correlation result, to produce a data-free complex-valued correlation result. A carrier phase of the local carrier signal is controlled based on a Doppler estimate for the GNSS signal, wherein the Doppler estimate is based at least in part on inertial measurements made at the receiver.

FIG. 4

EP 4 542 262 A1

**Description**

FIELD OF THE INVENTION

The present invention relates to Global Navigation Satellite Systems (GNSS). In particular, it relates to using Doppler estimates to support bit wipe-off and/or long coherent integration of GNSS signals.

BACKGROUND OF THE INVENTION

Techniques for GNSS positioning are well known in the art. Existing GNSS include the Global Positioning System (GPS), Galileo, GLONASS, and BeiDou Navigation Satellite System (BDS), also referred to herein as simply "BeiDou". Each GNSS comprises a constellation of satellites, also known in the art as "space vehicles" (SVs), which orbit the earth. Typically, each SV transmits a number of satellite signals. These are received by a GNSS receiver whose position it is desired to calculate. The GNSS receiver can make a number of ranging measurements using the signals, to derive information about the distance between the receiver and respective satellites. When a sufficient number of measurements can be made, the receiver's position can then be calculated by multilateration.

In order to make a GNSS measurement, it is necessary to acquire and track the relevant GNSS signal. While this may be relatively easy under open sky conditions, it may become more challenging under more difficult signal reception conditions. Multipath conditions may present particular difficulties. The accuracy of the position calculation depends on the accuracy of the ranging measurements. However, when significant multipath is present, the GNSS receiver may acquire and track a reflected version of the satellite signal, rather than the direct "line-of-sight" (LoS) signal. The reflected version is likely to have a different path length and therefore will produce a different ranging measurement, which may corrupt or degrade the accuracy of the resulting position fix.

Under challenging signal reception conditions, the LoS may be received weakly. Therefore, in order to successfully acquire and track the LoS signal, the receiver sensitivity should be as high as possible. Increasing the receiver sensitivity increases the likelihood of being able to detect the LoS GNSS signal, which in turn increases the likelihood of being able to reject multipath.

One way of increasing sensitivity is to increase the coherent integration time at the receiver.

SUMMARY OF THE INVENTION

It would be desirable to make the receiver more sensitive to GNSS signals. In particular, it would be desirable to increase the maximum coherent integration time that may be used by the receiver. However, as the coherent integration time is increased, the integration becomes more susceptible to changes in the speed or direction of travel of the GNSS receiver. Sudden acceleration may cause the receiver to lose its lock on the GNSS signal. Even if lock is not lost, the effect on the calculations may be such that the benefit of increasing the coherent integration period is lost. For example, it may be desirable to wipe off data bits of the GNSS signal, in order to support longer coherent integration times. However, sudden acceleration may cause bit-detection to fail - especially in challenging reception conditions. This, in turn, may corrupt the wipe-off process, leading to phase errors in the signal samples that are to be coherently integrated. In a conventional carrier tracking loop, these phase errors caused by erroneous bit-detection can interfere with accurate tracking. This can lead to an undesirable feedback effect - the erroneous bit detection corrupts the carrier phase estimation, and the erroneous carrier phase estimation further corrupts the bit detection process - and so on - rapidly leading to a loss of signal lock.

The present inventors have recognised that knowledge of changes in speed and orientation can be used to mitigate the negative effects of dynamic motion on the coherent integration. This can include mitigating the negative effects of motion on the bit detection and wipe off. Inertial measurements can be used to compensate for the motion, when detecting GNSS signals, detecting and wiping-off bits, and obtaining GNSS measurements.

A method and apparatus are provided for processing a GNSS signal received at a receiver. The method comprises mixing a local carrier signal with samples of the GNSS signal to generate carrier-free signal samples. It further comprises: correlating the carrier-free signal samples with a local spreading code to generate a complex-valued correlation result; and wiping off at least one of the data bits from the complex-valued correlation result, to produce a data-free complex-valued correlation result. A carrier phase of the local carrier signal is controlled based on a Doppler estimate for the GNSS signal, wherein the Doppler estimate is based at least in part on inertial measurements made at the receiver.

According to one aspect, there is provided a method of processing a GNSS signal received at a receiver, the GNSS signal containing a data message comprising a plurality of data bits, the method comprising:

   obtaining samples of the GNSS signal;

generating a local carrier signal;

generating a local spreading code;

mixing the local carrier signal with the samples to generate carrier-free signal samples;

correlating the carrier-free signal samples with the local spreading code to generate a complex-valued correlation result;

wiping off at least one of the data bits from the complex-valued correlation result, to produce a data-free complex-valued correlation result; and

processing the data-free complex-valued correlation result to produce at least one of: an indication of whether the GNSS signal is detected or not; and a GNSS measurement for the current epoch,

wherein a carrier phase of the local carrier signal is controlled based on a Doppler estimate for the GNSS signal, wherein the Doppler estimate is based on inertial measurements made at the receiver.

In an example, the GNSS signal does not include a pilot signal. The GNSS signal may be a GPS L1CA or BDS B1I signal, for example.

The carrier phase of the local carrier signal may be controlled such that it is not based directly on the result of any data bit detection derived from the GNSS signal. Any influence of the data bit detection on the carrier phase may be indirect and not immediate. For example, a GNSS measurement for the current epoch (produced by processing the data free complex valued correlation result) may be combined with GNSS measurements derived from other GNSS signals as well as information derived from inertial measurements. The combined information may influence the carrier phase in a later epoch.

Optionally, the carrier phase of the local carrier signal is not controlled using a carrier tracking loop based on the GNSS signal.

The Doppler estimate may be derived based on the inertial measurements and a navigation solution calculated previously at the receiver. The receiver may calculate/update a delay estimate and Doppler estimate for each visible SV, according to a line-of-sight (LoS) vector between the receiver (e.g. an antenna of the receiver) and that SV. The navigation solution may comprise a position, velocity, time (PVT) solution. At least the velocity solution may be calculated at a high rate (for example at a rate of at least 50 Hz).

The carrier phase of the local carrier signal may be controlled by controlling the frequency of the local carrier signal (since the phase can be advanced or retarded by increasing or decreasing the frequency, respectively). The frequency may be updated each time the Doppler estimate is updated (for example, at a rate of at least 50 Hz). This can help the carrier phase of the local carrier signal to more accurately track the carrier phase of the received GNSS signal.

Decoupling the carrier phase of the local carrier signal from (previous) bit detection results and/or from any carrier phase estimate based on the carrier-free signal samples can help to prevent errors in bit detection (or other errors in carrier phase estimation) from interfering with carrier signal tracking. It would be advantageous to break the error propagation between the carrier frequency/phase estimation and bit detection in the Costas loop. This can lead to a much more reliable bit detection, with the bit-error rate approaching the additive white Gaussian noise (AWGN) bound, especially at low carrier to noise density ratios. This can also facilitate longer coherent integration times. These attributes may be particularly advantageous when signal reception conditions are poor - for example, when carrier to noise density ratio is relatively low. In such conditions, carrier signal tracking based on a tracking loop may become unreliable.

The local carrier signal may also be referred to as a carrier replica or replica carrier signal. The local spreading code may also be referred to as a spreading code replica or replica spreading code.

The indication of whether the GNSS signal is detected or not may be useful in an acquisition phase or a re-acquisition phase. Re-acquisition may be required when a car exits a tunnel for instance, or in a hot-start scenario when the receiver is turned off for a short time and restarted while the timing can still be maintained precisely. In both cases, the lock on the GNSS signal is lost, but the receiver is able to predict the delay and Doppler quite precisely for the near future.

Processing the (data-free) complex-valued correlation result optionally comprises performing a discrete Fourier transform (DFT) on it. The GNSS measurement may be based on a result of the DFT. For example, the GNSS measurement may comprise a Doppler frequency and code-phase delay which are derived by finding a peak in one or more of the DFT results.

In some instances, the Doppler estimate may be derived from a navigation solution for the previous epoch. The navigation solution may be provided by a positioning engine (PE). The positioning engine may be configured to process GNSS measurements to produce the navigation solution. The navigation solution may comprise a state vector. The positioning engine may be configured to estimate the state vector at each epoch. The state vector may comprise a plurality of state variables, the state variables including one or more Doppler estimates, and optionally including one or more of: position variables, velocity variables, and time variables.

The method may further comprise detecting a data bit based on the complex-valued correlation result. The data bit may be detected based on a complex phase angle of the complex-valued correlation result.

The method may further comprise obtaining a data bit detected at a reference receiver. The receiver and the reference receiver may be components in a system configured to perform differential GNSS (DGNSS) positioning. In this case, the receiver may be (or may be part of) a "rover" device in the DGNSS system. The reference receiver may be configured to provide measurements and/or corrections to the receiver of the rover.

Typically, the reference receiver is in the same geographical region as the receiver. For example, the receiver may be located less than 400 km, optionally less than 100 km, 50 km, or 10 km from the reference receiver The reference receiver may be stationary. Obtaining the data bit may comprise receiving the data bit from the reference receiver directly or indirectly - for example, via direct or indirect wireless communications. Here, "direct" wireless communication should be understood as meaning wireless communication between two devices without intermediary - for example, as in a peer-to-peer network. "Indirect" wireless communication refers to communication between two devices via one or more intermediary devices. Therefore, when using indirect wireless communication, the data bit may be received wirelessly from an intermediary device, which received it directly or indirectly (via wired or wireless communication) from the reference receiver. In some examples, the wireless communication may comprise radio frequency (RF) communication.

It may be expected that the reference receiver has good signal reception conditions - for example, because of its location, lack of movement, and surroundings. For instance, the reference receiver may be located in an elevated position with a good view of the sky. It may therefore be able to receive GNSS signals more reliably than the (rover) receiver. Consequently, bit detection may be more reliable at the reference receiver than at the (rover) receiver.

Wiping off at least one of the data bits from the complex-valued correlation result may be based on the detected data bit.

Data bit wipe-off can facilitate greater sensitivity of the receiver, in particular in difficult signal reception conditions, for example by facilitating longer coherent integration times. It should be understood that the "detected data bit" here may refer to a data bit detected at the receiver based on the complex-valued correlation result, or to a data bit detected at a reference receiver and obtained from it.

The method may comprise: identifying a subframe of the data message that is associated with the detected data bit; determining that the subframe is not a repeating subframe that has been buffered previously; and wiping off the at least one of the data bits from the complex-valued correlation result based on the detected data bit, responsive to said determining.

The subframe in question may be either (i) a non-repeating subframe; or (ii) a repeating subframe that has not been buffered.

Data bits may be wiped off differently for different subframes of the data message. This can help to increase the range of circumstances in which wipe-off is possible and/or may help to enhance the accuracy of wipe-off.

Data-bit wipe off based on a detected data bit may facilitate wipe-off when the subframe is not a repeated, identical instance of one that has been buffered previously (and therefore the data bit cannot be determined from knowledge of a previous part of the data message).

The method may comprise: identifying a subframe of the data message that is associated with the detected data bit; determining a signal quality metric associated with the detected data bit; and determining that the subframe is not a repeating subframe that has been buffered previously, and that the signal quality metric exceeds a signal quality threshold; and wiping off the at least one of the data bits from the complex-valued correlation result based on the detected data bit, responsive to said determining.

If the signal quality metric does not exceed the signal quality threshold, data bit wipe-off may comprise squaring the complex-valued correlation result. However, this may involve a squaring loss. When the signal quality metric exceeds the threshold, wiping off based on the detected data bit may lead to more accurate results.

The method may further comprise storing the detected data bit in a buffer. The buffer may be a subframe buffer configured to store the detected bits of one or more subframes. Storing detected data bits in the buffer can enable the receiver to (re-)use knowledge of them later, for data-bit wipe-off.

The method may comprise: identifying a subframe of the data message that is associated with the detected data bit; determining that the subframe is a repeating subframe; and storing the detected data bit in the buffer, responsive to said determining.

For a repeating subframe, storing detected data bits in the buffer can enable the receiver to (re-)use the knowledge of those data bits when later decoding (and/or wiping off) a subsequent (identical) instance of the repeating subframe. The repeating subframe may have a repetition-period shorter than a predetermined threshold period (for example, one minute).

The method may comprise: identifying a subframe of the data message that is associated with the detected data bit; determining a signal quality metric associated with the detected data bit; determining that the subframe is a repeating subframe and that the signal quality metric exceeds a signal quality threshold; and storing the detected data bit in the buffer, responsive to said determining.

The signal quality metric may comprise a carrier signal to noise density ratio, for example. Taking into account the signal quality metric can help to ensure that only correctly detected data bits are used to support later wipe-off. This can help to improve the accuracy of wipe-off, and thereby enhance the sensitivity of the receiver.

The method may further comprise retrieving a stored data bit from a buffer, wherein wiping off at least one of the data bits from the complex-valued correlation result is based on the retrieved data bit.

(Re-)using previously buffered data bits for wipe-off can improve the accuracy of wipe-off - for example, if the signal reception conditions have deteriorated since the data bits were buffered, then the buffered data bits may be more accurate than currently detected data bits.

In greater detail, the method may comprise: at a first epoch, detecting a data bit based on a first complex-valued correlation result and storing the detected data bit in a buffer; and at a second, later epoch, retrieving the stored data bit from the buffer, and wiping off at least one of the data bits from a second complex-valued correlation result, based on the retrieved data bit.

The storing in the buffer may be done based on any of the conditions already summarised above. In particular, a subframe of the data message that is associated with the detected data bit may be a repeating subframe (optionally with a repetition-period shorter than a predetermined threshold period). The first epoch may be associated with a first instance of the repeating subframe; the second epoch may be associated with a second instance of the repeating subframe.

The method may comprise: identifying a subframe of the data message that is associated with the at least one data bit to be wiped off; determining that the subframe is a repeating subframe that has been buffered previously; and wiping off the at least one of the data bits from the complex-valued correlation result based on the retrieved data bit, responsive to said determining.

The data bits of a repeating subframe are repeated in multiple iterations of the subframe (during a predetermined validity interval). This makes repeating subframes particularly amenable to the present method.

The method may comprise: identifying a subframe of the data message that is associated with the at least one data bit to be wiped off; determining a signal quality metric; determining that the subframe is a repeating subframe that has been buffered previously and that the signal quality metric does not exceed a signal quality threshold; and wiping off the at least one of the data bits from the complex-valued correlation result based on the retrieved data bit, responsive to said determining.

Wipe-off based on retrieved buffered data bits may be particularly advantageous when a repeating subframe is encountered and the signal quality is less than or equal to a threshold. If the signal quality was greater than the threshold, wipe-off by detecting the current data bits might be adequate. However, when the signal quality is low, wipe-off by detecting the current data bits might be unreliable. By making the use of the retrieved data bits conditional on low signal quality, examples of the present method can switch to using buffered data bits in the situations where that brings the biggest performance benefit.

In some examples, the method may comprise: identifying a subframe of the data message that is associated with the at least one data bit to be wiped off; determining whether the subframe is a repeating subframe that has been buffered previously; responsive to determining that the subframe is a repeating subframe that has been buffered previously: retrieving a stored data bit from a buffer, and wiping off the at least one of the data bits from the complex-valued correlation result based on the retrieved data bit; and responsive to determining that the subframe is not a repeating subframe that has been buffered previously: detecting a data bit based on the complex-valued correlation result (or obtaining a data bit detected at a reference receiver); and wiping off the at least one of the data bits from the complex-valued correlation result based on the detected data bit.

Optionally, in some examples, the method may comprise: identifying a subframe of the data message that is associated with the at least one data bit to be wiped off; determining whether the subframe is a repeating subframe that has been buffered previously; determining a signal quality metric; determining whether the signal quality metric exceeds a signal quality threshold; responsive to determining that the subframe is a repeating subframe that has been buffered previously: retrieving a stored data bit from a buffer, and wiping off the at least one of the data bits from the complex-valued correlation result based on the retrieved data bit; and responsive to determining that the subframe is not a repeating subframe that has been buffered previously and the signal quality metric exceeds the signal quality threshold: detecting a data bit based on the complex-valued correlation result (or obtaining a data bit detected at a reference receiver); and wiping off the at least one of the data bits from the complex-valued correlation result based on the detected data bit.

(If the subframe is not a repeating subframe that has been buffered previously and the signal quality metric does not exceed the signal quality threshold, wiping off the at least one of the data bits may comprise squaring.)

Optionally, in some examples, the method may comprise: identifying a subframe of the data message that is associated with the at least one data bit to be wiped off; determining whether the subframe is a repeating subframe that has been buffered previously; determining a signal quality metric; determining whether the signal quality metric exceeds a signal quality threshold; responsive to determining that the subframe is a repeating subframe that has been buffered previously and the signal quality metric does not exceed the signal quality threshold: retrieving a stored data bit from a buffer, and wiping off the at least one of the data bits from the complex-valued correlation result based on the retrieved data bit; responsive to determining that the subframe is a repeating subframe that has been buffered previously and the signal quality metric exceeds the signal quality threshold: detecting a data bit based on the complex-valued correlation result (or obtaining a data bit detected at a reference receiver); wiping off the at least one of the data bits from the complex-valued correlation result based on the detected data bit; and storing the detected data bit in the buffer and responsive to determining that the subframe is not a repeating subframe that has been buffered previously and the signal quality metric exceeds the signal quality threshold: detecting a data bit based on the complex-valued correlation result (or obtaining a data bit detected at a reference receiver); and wiping off the at least one of the data bits from the complex-valued correlation result based on the detected data bit.

Correlating the carrier-free signal samples with the local spreading code optionally comprises: correlating the carrier-free signal samples with an early version of the local spreading code, to generate an early complex-valued correlation result; correlating the carrier-free signal samples with a prompt version of the local spreading code, to generate a prompt complex-valued correlation result; and correlating the carrier-free signal samples with a late version of the local spreading code, to generate a late complex-valued correlation result.

This approach can enable greater robustness to slight errors in the code phase of the local spreading code. The coherent integration (in particular, the DFT) may be applied separately to the results of the late, prompt, and early correlations.

The method may comprise: determining a first signal quality metric associated with the early complex-valued correlation result; determining a second signal quality metric associated with the prompt complex-valued correlation result; determining a third signal quality metric associated with the late complex-valued correlation result; identifying the highest signal quality metric among the first, second, third signal quality metrics; and detecting a data bit based on the complex-valued correlation result that is associated with the highest signal quality metric.

For example, if the first signal quality metric is the highest signal quality metric, the method may comprise detecting the data bit based on the early complex-valued correlation result. If the second signal quality metric is the highest signal quality metric, the method may comprise detecting the data bit based on the prompt complex-valued correlation result. If the third signal quality metric is the highest signal quality metric, the method may comprise detecting the data bit based on the late complex-valued correlation result.

Using the correlation "tap" with the highest signal quality metric can increase the accuracy of data bit detection.

Each signal quality metric may be based on a complex magnitude of the associated complex-valued correlation result. Detecting the data bit may be based on a complex phase angle of the complex-valued correlation result.

A code phase of the local spreading code may be controlled based on the Doppler estimate. This can enable not only the local carrier signal but also the local spreading code to dynamically track the received GNSS signal, based on the inertial measurements. The code phase may be updated each time the Doppler estimate is updated (for example, at a rate of at least 50 Hz).

Processing the data-free complex-valued correlation results optionally comprises coherently integrating the data-free complex-valued correlation results.

The coherent integration may help to increase the sensitivity of the receiver to weak GNSS signals. The coherently integrating may comprise coherently integrating over a time interval that is longer than a duration of a data bit - and, optionally, longer than the duration of two, three, or more data bits.

The GNSS measurement may be based on a result of the coherent integration.

The coherent integration may comprise integrating over at least .0.25 s, at least 0.5 s, at least 1 s, or at least 2 s. It may comprise integrating over less than 10 s, less than 5 s, or less than 4 s. (All combinations of these endpoints are hereby disclosed.)

The GNSS measurement may comprise a code phase of the GNSS signal, and processing the data-free complex-valued correlation results optionally comprises determining the code phase of the GNSS signal based on the data-free complex-valued correlation results. Wiping off the data bits using the methods summarised here may assist in more accurately determining the code phase.

The method may further comprise calculating a navigation solution based on the determined code phase. Wiping off the data bits using the methods summarised here may assist in more accurately determining the navigation solution.

The Doppler estimate may be one of a sequence of Doppler estimates, wherein the sequence of Doppler estimates is produced at a frequency greater than or equal to a baud rate of the data message. Frequent updates to the Doppler estimate can assist in tracking the received GNSS signal more closely.

The method may further comprise: estimating a rate of change of the Doppler estimate; and extrapolating a second Doppler estimate from the Doppler estimate, wherein the second Doppler estimate is extrapolated based on the estimated rate of change, wherein the carrier phase of the local spreading code is controlled based on the second Doppler estimate.

This can help to compensate for a latency in the Doppler estimate, thereby increasing the accuracy of the Doppler estimate and consequently improving the tracking of the GNSS signal.

Also provided is a computer program comprising computer program code configured to cause one or more physical computing devices to perform all the steps of a method as claimed in any one of the preceding claims when said computer program is run on said one or more physical computing devices.

The one or more physical computing devices may comprise or consist of one or more processors of a GNSS receiver. The computer program may be stored on a computer-readable medium (optionally non-transitory).

Also provided is a Global Navigation Satellite System, hereinafter GNSS, receiver, configured to process a GNSS signal, the GNSS receiver comprising a measurement engine configured to:

obtain samples of the GNSS signal;

generate a local carrier signal;

generate a local spreading code;

mix the local carrier signal with the samples to generate carrier-free signal samples;

correlate the carrier-free signal samples with the local spreading code to generate a complex-valued correlation result;

wipe off at least one of the data bits from the complex-valued correlation result, to produce a data-free complex-valued correlation result; and

process the data-free complex-valued correlation result to produce at least one of: an indication of whether the GNSS signal is detected or not; and a GNSS measurement for the current epoch,

wherein a carrier phase of the local carrier signal is controlled based on a Doppler estimate for the GNSS signal, wherein the Doppler estimate is based on inertial measurements made at the receiver.

The GNSS receiver may further comprise: an RF front-end, for receiving the GNSS signal, and for down-converting and digitising the GNSS signal; and a mixer for wiping off a residual carrier from the signal. The GNSS receiver may further comprise an intermediate-frequency (IF) processing unit, for processing the signal down-converted from RF to IF by the RF front-end. An output of the RF front-end may be coupled to an input of the intermediate-frequency processing unit. An output of the IF processing unit may be coupled to an input of the mixer.

The GNSS receiver may further comprise at least a first correlator, coupled to an output of the mixer, configured to wipe off a spreading code of the GNSS signal. The first correlator may be part of a bank of correlators, including early, prompt, and late correlators.

One or more outputs of the correlator(s) may be coupled to a bit detector and one or more respective multipliers configured to wipe off bits from the output(s) of the correlator(s).

The GNSS receiver may further comprise a buffer for storing detected bits - in particular bits of repeating subframes. The GNSS receiver may further comprise a switch configured to selectively couple the one or more multipliers to either the bit-detector or the buffer.

The GNSS receiver may further comprise a code generator, configured to generate the local spreading code. The code generator may be controlled at least in part based on the Doppler estimates.

The code generator may comprise a numerically controlled oscillator (NCO), configured to generate a clock signal for generating the local spreading code.

The code generator may provide an input to the correlator to enable it to wipe off the spreading code of the GNSS signal.

The GNSS receiver may further comprise a carrier generator, configured to generate a local carrier signal for wiping off the residual carrier from the GNSS signal. The carrier generator may comprise an NCO configured to generate the local carrier signal.

BRIEF DESCRIPTION OF THE DRAWINGS

The invention will now be described by way of example with reference to the accompanying drawings, in which:

Fig. 1 is a block diagram of a GNSS receiver operating in a first mode of operation, according to an example (not presently claimed in isolation);

Fig. 2 is a block diagram of a GNSS receiver operating in a second mode of operation, according to an example;

Fig. 3 is a block diagram of a GNSS receiver operating in a third mode of operation, according to an example;

Fig. 4 is a block diagram of a variant of the GNSS receiver illustrated in Fig. 2, according to an example;

Fig. 5 is a block diagram of a variant of the GNSS receiver illustrated in Fig. 3, according to an example;

Fig. 6 is a graph illustrating Doppler frequency extrapolation according to an example; and

Fig. 7 is a block diagram of a DGNSS positioning system according to an example.

Additional drawings are provided in the Appendix, as follows:

Fig. A-1 illustrates an example of IMU-aided LoS tracking in a multi-path (MP) environrment, with subfigure (a) illustrating the rover trajectory and channel conditions (LoS + one MP) and subfigure (b) illustrating the Doppler dynamics;

Fig. A-2 illustrates the impact of frequency error and its rate on 1s coherent integration, with subfigure (a) illustrating spreading code correlation magnitude and subfigure (b) illustrating spectrum magnitude with window coefficient $\alpha = 1$;

Fig. A-3 is a block diagram illustrating LoS detection and estimation using sensor-aided long coherent integration (SALI), according to an example;

Fig. A-4 shows plots of delay error (LOS + one MP at -3dB, delay e [0, $T_c$], phase e [0, $\pi$], identical frequency w.r.t. LOS, tap spacing = $T_c/16$), with subfigure (a) relating to a double-delta DLL, subfigure (b) relating to early-late line intersection and subfigure (c) relating to mean interpolator errors;

Fig. A-5 illustrates correlation in a three-path model with different frequency error rates and multipath coherence time, with subfigure (a) relating to 20ms coherent integration with long/short multipath coherence time, subfigure (b) relating to 1s coherent integration with long multipath coherence time, and subfigure (c) relating to 1s coherent integration with short multipath coherence time;

Fig. A-6 illustrates correlation in a two-path model including near multipaths with short coherence time, with subfigure (a) relating to 20ms coherent integration with short multipath coherence time, and subfigure (b) relating to 1s coherent integration with short multipath coherence time;

Fig. A-7 illustrates cumulative distribution functions (CDFs) of Doppler and pseudo-range (PR) errors at different speeds and C/N0 across all test drives, with subfigure (a) relating to Doppler error at high/low speeds, subfigure (b) relating to PR error at high/low speeds, subfigure (c) relating to Doppler error at high/low C/N0, and subfigure (d) relating to PR error at high/low C/N0;

Fig. A-8 illustrates non-line-of-sight (NLoS) flag and MP indicator performance across all test drives, with subfigure (a) relating to PR error of the reference receiver, subfigure (b) relating to Doppler error of the reference receiver, and subfigure (c) relating to PR error of the SALI receiver;

Fig. A-9 illustrates measurement and position errors in different environments across all test drives, with subfigure (a) relating to PR error CDF (mountain plot), subfigure (b) relating to Doppler error CDF (mountain plot), and subfigure (c) relating to horizontal error CDF;

Fig. A-10 illustrates road test results, with subfigure (a) relating to integrity diagrams across all test drives, subfigure (b) relating to a road test example in downtown Frankfurt am Main, and subfigure (c) relating to a road test example: LOS estimation of Beidou B44 in NYC, ref. vs. SALI;

Fig. A-11 illustrates degenerated SALI in road tests, with subfigure (a) relating to Non-SF, ≤20ms CI, Hakone, subfigure (b) relating to Non-SF, 100ms CI, Hakone, subfigure (c) relating to SF, ≤20ms CI, London, and subfigure (d) relating to SF, 100ms CI, London; and

Fig. A-12 illustrates a CPU load comparison on ARM Cortex M3, with subfigure (a) relating to total CPU load of the reference SF receiver, and subfigure (b) relating to total CPU load of the SALI SF receiver.

It should be noted that these figures are diagrammatic and not drawn to scale.

## DETAILED DESCRIPTION

Reference will now be made in detail to examples according to the present disclosure, which are illustrated in the accompanying drawings. The described examples should not be construed as being limited to the descriptions given in this section; the examples may have different forms.

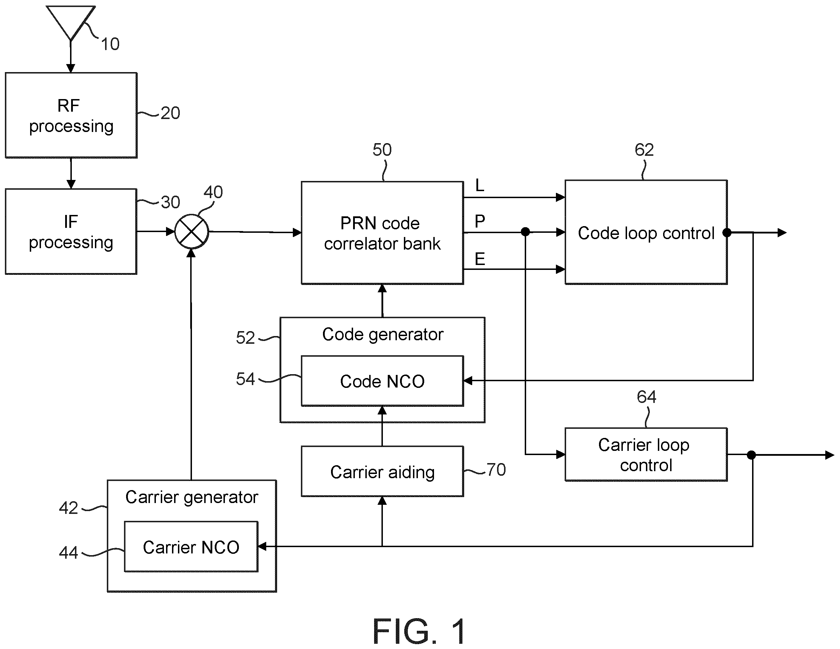

Fig. 1 is a block diagram of a GNSS receiver operating in a first mode of operation, according to an example (not presently claimed). This particular mode of operation reflects a conventional approach to signal-tracking. This conventional approach may be suitable under good signal reception conditions (for example, open sky conditions with little or no multipath).

The GNSS receiver is configured to receive satellite signals from GPS satellites. It may alternatively or additionally be configured to receive satellite signals from other constellations (for example, Galileo and BeiDou). The GNSS receiver comprises an antenna 10 for receiving satellite signals. An RF front-end 20, coupled to the antenna 10, is configured to down-convert and digitise the satellite signals received via the antenna 10. The RF front-end essentially conditions the signals for subsequent signal processing. Other typical tasks performed by the front-end include filtering, amplification and automatic gain control. The satellite signals received at the RF front-end 20 via the antenna 10 include an L1C/A signal.

The GNSS receiver further comprises an intermediate frequency (IF) processing unit 30, configured to process the satellite signals converted from radio frequency (RF) to IF in the RF front-end. The output of the IF processing unit 30 is coupled to an input of a mixer 40. The other input of the mixer 40 receives a local carrier wave, hereafter replica carrier signal, generated to replicate the carrier frequency and phase of the incoming signal. The replica carrier signal is a digital sinusoidal signal generated by a carrier generator 42. In this way, the mixer 40 is configured to wipe off, i.e. remove, any residual carrier, e.g. offset caused by the Doppler effect, from the incoming signal, by mixing the incoming signal with the replica carrier signal (in other words, calculating the product of the incoming signal and the replica carrier signal). In the present example, it will be assumed that the intermediate frequency is (approximately) zero. Although the carrier of the satellite signal is already removed before the incoming signal reaches mixer 40, there will be a (small) constant remaining IF and a varying carrier offset caused by the relative motion between the satellite and GNSS receiver. The carrier generator 42 comprises a numerically controlled oscillator (NCO) 44 configured to generate the replica carrier signal.

The output of the mixer 40 is provided as input to a bank 50 of correlators comprising three correlators. Each correlator comprises a multiplier and an integrate-and-dump (I/D) unit (not shown in Fig. 1). The output of each multiplier is provided as input to the respective integrate-and-dump (I/D) unit. Each multiplier multiplies the input signal by a replica spreading code. Each I/D unit calculates the sum of the resulting product values, over a suitable dwell. The dwell defines the length of a coherent integration within the correlator, and corresponds an integer number of iterations (most commonly one iteration) of a spreading code used to modulate the GNSS signal. The bank of correlators includes an "early" (E) correlator, a "prompt" (P) correlator; and a "late" (L) correlator. As their names suggest, these three correlators use differently shifted versions of the replica spreading code. The replica spreading code is a binary pseudorandom noise (PRN) signal, and is generated by a code generator 52, which operates under the control of code loop controller 62. The code loop controller 62 receives the outputs of the three I/D units. It should be understood that the use of three correlators is merely illustrative. In many examples, there may be more than three correlators. In particular, there may be multiple "early" correlators, each with a different delay (shift) of the replica spreading code. Likewise, there may be multiple "late" correlators, each with a different delay (shift) of the replica spreading code. According to one implementation, there are four "early" correlators and four "late" correlators, in addition to one prompt correlator - that is, nine correlators in total.

Depending on which of the correlators (E, P, L) has the maximum output value for the current dwell, the controller 62 determines whether to adjust (for example, increment or decrement) the code phase delay control signal, which it provides to the code generator 52.

The code generator 52 is a signal code generator for the relevant GNSS signal. It comprises an NCO 54, which is configured to generate a clock signal for generating the replica spreading code for the GNSS signal. The NCO is controlled partly by the code phase delay control signal from the code loop controller 62 and partly based on frequency estimates generated by a carrier loop controller 64.

In this way, the bank of correlators, together with the code loop controller 62, carrier loop controller 64, and the code generator 52, function as a code phase tracking loop - in other words, a delay locked loop (DLL) - for the GNSS signal. The code phase tracking loop ensures that the code phase of the replica spreading code used by the "P" correlator tracks the actual code phase of the received other L1 signal with as little delay as possible.

The outputs of the I/D units within the bank 50 of correlators consist of complex-valued samples, also referred to as in-phase and quadrature samples (I/Q samples). In particular, the output of the I/D unit for the prompt (P) correlator represents I/Q samples of the GNSS signal. When implemented in hardware, each correlator (as with other hardware blocks), will include separate I- and Q-branches. That is, there will be a multiplier and an I/D unit for the in-phase (I) samples, and another multiplier and I/D unit for the quadrature-phase (Q) samples. Nevertheless, for simplicity, it is more convenient to conceptualise these as a single multiplier and a single I/D unit, having complex outputs, and that is how they will be described here.

The I/Q samples from the prompt ("P") correlator output are provided to the carrier loop controller 64. The carrier loop controller 64 estimates the carrier frequency and carrier phase of the GNSS signal. It outputs the estimate as a carrier control signal, which is fed back to control the NCO 44 of the carrier generator 42. In providing this feedback, the carrier loop controller 64 implements a carrier tracking loop for the GNSS signal, ensuring that the frequency (and phase) of the replica carrier signal (generated by the carrier generator 42) tracks the actual frequency (and phase) of the carrier of the received L1 signal as closely as possible. This enables the GNSS receiver to take account of Doppler shift, due to the relative motion between the receiver and satellite. By controlling the frequency of the NCO in the carrier generator 42, both the frequency and phase of the replica carrier signal are controlled to match the frequency and phase of the residual carrier. (The phase of the replica carrier signal is advanced by increasing the frequency; the phase is retarded by decreasing the frequency.) Effectively, this implements a phase locked loop (PLL), tracking the residual carrier frequency and phase.

In the present implementation, the code loop controller 62 and the carrier loop controller 64 produce updates at the same rate - for example, 50 Hz. That is, they both operate on the same control period - in this example, 20 ms.

As well as updating the NCO 54 of the code generator 52 based on the code phase measurements produced by the code loop controller 62, it may be advantageous to update the chipping rate (and thereby code phase) of the NCO 54 based on the output of the carrier loop controller 64. Carrier aiding block 70 converts the output of the carrier loop controller 64 (which is effectively an estimate of Doppler frequency) into a chipping rate control value for the code NCO 54. The code NCO 54 runs at the specified chipping rate over the course of the control period (e.g., 20 ms). The chipping rate thereby influences the evolution of the code phase of the replica spreading code. The chipping rate control value is a down-scaled value from the Doppler estimate, based on the constant ratio of nominal carrier frequency to nominal chipping rate. If the code loop controller 62 detects a change/error in the code phase, it updates the code phase delay control signal accordingly, in the next control period. This control of the code phase is added to the cumulative effect of the chipping rate control.

Note that, in contrast to the carrier NCO 44, the code NCO 54 has two inputs - one for chipping rate control (from carrier aiding block 70, based on the Doppler estimate from the carrier loop controller 64) and one for code phase control (from the code loop controller 62). They are controlled independently. The chipping rate control determines the chipping rate. The code phase control determines the initial code phase of the control period. As a result, unlike the carrier phase, governed by the PLL described previously, above (for tracking the carrier frequency and phase), the code phase is not necessarily continuous at the boundary between control periods.

The components described above enable the GNSS receiver to track the GNSS signal in frequency and phase of the carrier as well as code phase. The code tracking loop and the carrier loop form a "measurement engine" that includes blocks 40-70.

In tracking mode, the output of the code loop controller 62 provides a real-time code phase measurement. Likewise, the output of the carrier loop controller 64 provides a real-time Doppler measurement. This code phase measurement and Doppler measurement are provided to a positioning engine (not shown in Fig. 1) which combines them with GNSS measurements from other GNSS signals to calculate a navigation solution (including a position fix). In acquisition mode, the code loop controller 62 can detect whether a GNSS signal has been acquired successfully, or whether the tracking loop is in effect tracking noise. This can be done by comparing the correlation results on the early, late, and prompt taps. When a GNSS signal is present, the magnitude of the correlation output on the prompt tap is significantly greater than the respective magnitudes on the early and late taps.

Demodulation / bit-detection is not illustrated in the simplified block diagram of Fig. 1. However, it should be understood that this is typically also performed, in practice, when receiving GNSS signals. When tracking a pilot sequence, there is no need for bit detection. When tracking the remainder of the GNSS signal, bit detection can be performed by examining phase changes from symbol to symbol on the prompt correlator output.

According to one aspect of the present disclosure, the tracking scheme of Fig. 1 is used when the GNSS receiver determines that signal reception conditions are good (at least for the GNSS signal in question). For example, the GNSS receiver may determine that C/No is greater than 37 dB-Hz, or that carrier phase lock is intact, or that the residual is below a predetermined threshold (or may determine that a combination of two or more of these criteria are met). The residual is the difference between (i) the estimated distance from the receiver to the respective satellite and (ii) the actual range measurement. When the residual is low, it indicates good consistency between the range measurement for the current satellite of interest and those for the other satellites.

Note that the decision about which mode to use can be made independently for each GNSS signal that is being tracked by the receiver. (Fig. 1 illustrates the tracking method for one GNSS signal, but it should be understood that the receiver will typically track several GNSS signals simultaneously, in order to produce a navigation solution.)

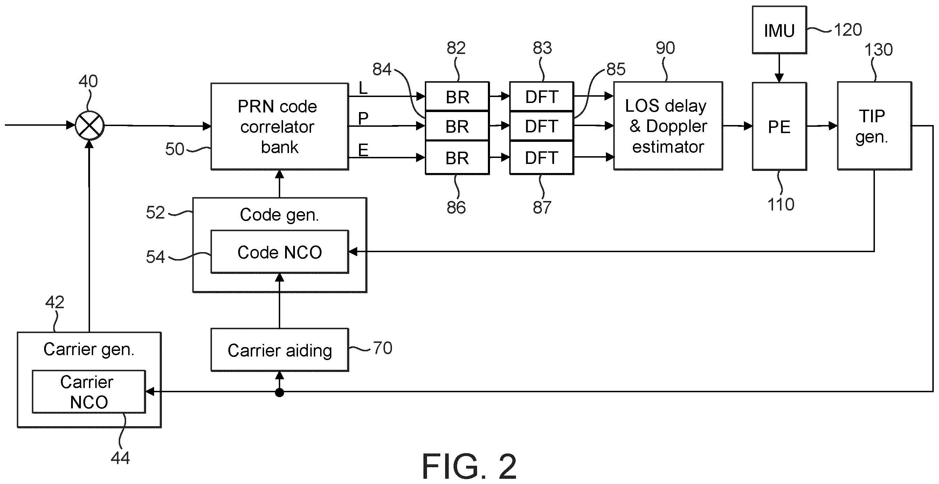

Fig. 2 is a block diagram of a GNSS receiver operating in a second mode of operation, according to an example (not presently claimed). The antenna 10, RF front-end 20, and IF processing unit 30 are omitted, for simplicity. They are the same as in the example of Fig. 1. The mixer 40, bank 50 of correlators, carrier generator 42, code generator 52, and carrier aiding block 70 operate in the same way as in Fig. 1, and will not be further described for this reason.

The operation mode illustrated in Fig. 2 differs from that illustrated in Fig. 1 by the way in which the carrier and chipping code of the GNSS signal are tracked. In the operation mode illustrated in Fig. 2, there is no feedback loop within the measurement engine itself. Instead, feedback to control the carrier NCO 44 and the code NCO 54 is provided from a positioning engine (PE) 110, which is responsible for calculating the navigation solution.

For the operation mode shown in Fig. 2, the outputs of the late, prompt, and early taps of the bank 50 of correlators are provided as inputs to respective bit removal (BR) blocks 82, 84, and 86. When receiving a part of the GNSS signal that contains data (for example, a navigation message), the bit removal blocks 82, 84, 86 wipe off the detected data bit by multiplying the complex correlator output by 1 or -1, as appropriate. When receiving a part of the GNSS signal that contains a pilot sequence, there is no need for bit detection, since the bit sequence of the pilot signal is known in advance.

The output of each bit removal block 82, 84, 86 is provided as input to a respective discrete Fourier transform (DFT) block 83, 85, 87. Each DFT block calculates a Fourier transform of the complex correlator outputs, over a defined coherent integration interval. The outputs of the DFT blocks 83, 85, 87 are provided as input to a line-of-sight (LoS) delay and Doppler estimator 90. The estimator 90 uses the information from the Fourier transforms to estimate a carrier phase and code phase of the GNSS signal.

The collective output of the DFT blocks 83, 85, 87 forms a two-dimensional matrix spanning a range of frequencies and a range of code-phase delays. In time variant channels, each multipath component typically possesses a Doppler and delay value that are different to the LoS values. In this delay-frequency matrix, a correlation triangle shows up at a specific Doppler value, with the peak of the triangle indicating the vicinity of delay and Doppler of a multipath component. By inspecting the matrix, several such peaks in the delay-frequency grid can be identified. The peak with the shortest time-of-arrival is detected as the line-of-sight path. When this is done, the taps on both sides of the correlation triangle are interpolated to give an estimate of the delay.

When the GNSS signal is being tracked accurately (and in the absence of fast dynamics) the LoS component should remain aligned with the "prompt" tap, with a Doppler frequency of zero. Any deviation of the code phase of the local spreading code from the code phase of the received GNSS signal will cause either the early or the late correlator tap to show an output with a greater magnitude than the prompt tap. Meanwhile, any deviation of the carrier frequency of the local carrier signal from the carrier frequency of the received GNSS signal will show up in the Fourier transform as a peak at a nonzero frequency.

The output of the estimator 90 corresponds to the output of the code loop controller 62 and the carrier loop controller 64 of Fig. 1. However, in the mode of operation illustrated in Fig. 2, the output of the estimator is not used directly to control the carrier generator 42 or the code generator 52. Instead, the output of the estimator 90 is provided as one of a number of inputs to the positioning engine 110. The positioning engine 110 also receives input from an inertial measurement unit (IMU) 120. One output of the positioning engine is a navigation solution, including estimates of position, velocity, time (PVT), and other state variables. The navigation solution is produced once per epoch and is passed to a "Tracking Intelligence Provider" (TIP) generator 130. The positioning engine 110 also outputs more frequent estimates of Doppler frequency, based on the inertial measurements that have been received since the most recent navigation solution. These Doppler frequency estimates are also output to the TIP generator. By way of example, the interval between epochs may be 1 s; therefore, the navigation solution may be output at a frequency of 1 Hz. The interval between Doppler estimates may be 20 ms; thus, the Doppler estimates may be output at a frequency of 50 Hz.

The TIP generator 130 converts the outputs of the positioning engine 110 into a code phase delay control signal for the code generator 52 and a carrier control signal for the carrier generator 42. To do this, the TIP generator 130 compares the current satellite positions with the current PVT solution from the positioning engine 110. From this comparison, the TIP generator predicts the delay and Doppler along the line-of-sight vector from the receiver to each of the satellites.

The code phase delay control signal is updated at the lower rate (for example, 1 Hz). This is because the code phase estimates are produced as part of the navigation solution once per epoch. The carrier control signal is updated at the higher rate, based on the more frequent Doppler estimates. Note that, although the code phase delay control signal is only updated at the lower rate (e.g., 1 Hz), the code phase of the code generator 52 is updated at the higher rate (e.g., 50 Hz). This is because the carrier aiding unit 70 updates the code generator 52 continually in the interval between epochs, at the higher rate, based on the higher rate Doppler estimates. In this way, the high-rate Doppler estimates can help to compensate for acceleration and high-order dynamics of the receiver during the coherent integration by the correlator bank and DFT blocks. Note, however, that the code phase of the code NCO is re-initialised at the start of each epoch based exclusively on the code phase delay control signal. In other words, the evolution of the code phase over the preceding epoch due to the cumulative influence of the carrier aiding block 70 does not affect the setting of the code phase at the start of the next epoch.

The measurement engine in Fig. 2 comprises blocks 40-90 (but not blocks 110, 120, 130). The output of the measurement engine is the output of the estimator 90. The positioning engine 110 receives corresponding inputs from multiple measurement engines - one for each GNSS signal that is being tracked. Typically, at least four signals from different satellites will be tracked, in order to support the calculation of the navigation solution. The positioning engine 110 combines the information provided by the GNSS measurements from the various measurement engines with the information provided by inertial measurements from the IMU 120. To do this, the positioning engine 110 uses a Kalman filter or other state estimator. The output of the state estimator includes the position, velocity, and time (PVT) solution. As mentioned above, the TIP generator 130 predicts the Doppler frequency and code phase for each GNSS signal based on the PVT solution and corresponding satellite LoS vectors. Note that, in some embodiments, the functionality of the TIP generator 130 may be merged into the positioning engine 110. For example, the positioning engine 110 may output state estimates for Doppler frequency and code phase for each satellite.

The mode of operation illustrated in Fig. 2 may be particularly suitable in difficult signal reception conditions. Completing the tracking loops through the positioning engine 110, helps to make the feedback to the code generator 52 and carrier generator 42 as robust and stable as possible. In situations where the tracking lock on one weak GNSS signal might otherwise be lost by the respective measurement engine, if it were working in isolation, the information provided by the other measurement engines (and the IMU 120) can enable continued tracking of the weak GNSS signal.

At the same time, because the tracking can keep a lock on the GNSS signal even in challenging signal reception conditions (and even in cases of fast dynamics, thanks to the use of the inertial measurements), the coherent integration time of the bank 50 of correlators and the subsequent DFT blocks 83, 85, 87 can be increased. This in turn increases the sensitivity of the measurement engine, enabling it to acquire and track weaker signals. In one example according to the present disclosure, the coherent integration time of the DFT blocks is 1 s.

A sequence of operations performed for each epoch will now be described in greater detail. Once per epoch, the positioning engine 110 provides code phase and Doppler input from the navigation solution. This is used to set the NCOs 44 and 54. The bank 50 of correlators begins producing millisecond samples. The positioning engine 110 provides high-rate Doppler input many times per epoch (for example 50 times per epoch, in the present example). Each time fresh Doppler input is provided, the NCOs 44 and 54 are set based on it. (The code NCO 54 is set via the carrier aiding unit 70; the carrier NCO is set directly.) The bank 50 of correlators continues producing millisecond samples. These are input to the DFT blocks 83, 85, 87 to calculate the DFT. After the Fourier Transforms are produced by the DFT blocks 83, 85, 87, they are evaluated by the estimator 90.

Optionally, the millisecond samples can be pre-integrated as soon as they are available, in order to begin calculating the DFT in a pipelined fashion. Alternatively, the millisecond samples can be stored until enough samples are available for a complete coherent integration period (e.g., 1 s) and the DFT can then be calculated using the complete set of samples.

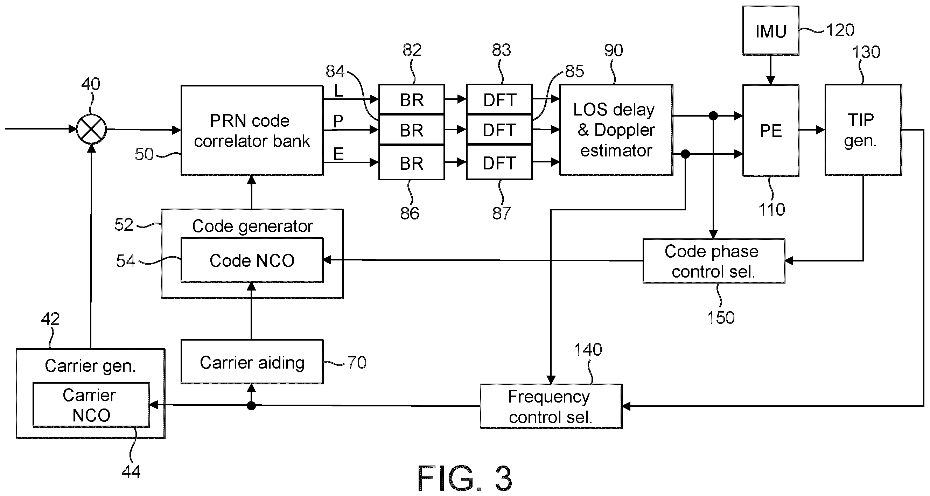

Fig. 3 is a block diagram of a GNSS receiver operating in a third mode of operation, according to an example. The third mode of operation is essentially a hybrid of the first two modes. It is most easily understood by comparing Fig. 3 with Fig. 2. As with Fig. 2, the antenna, RF front-end and IF processing unit are omitted for simplicity. The operation mode of Fig. 3 relies on all the same components as Fig. 2, operating in the same way. This includes the mixer 40, bank 50 of correlators, carrier generator 42, code generator 52, carrier aiding block 70, bit removal blocks 82, 84, 86, DFT blocks 83, 85, 87, estimator 90, positioning engine 110, IMU 120, and TIP generator 130. However, the mode of operation of Fig. 3 relies on two additional components - namely a frequency control selector 140 and a code phase control selector 150.

The frequency control selector 140 receives two inputs. One input is coupled to an output of the LoS delay and Doppler estimator 90. This provides the frequency control selector 140 with the Doppler estimate produced by the measurement engine (that is, by the estimator 90). A second input is coupled to an output of the TIP generator 130. This provides the frequency control selector 140 with the Doppler estimate produced from the output of the positioning engine 110 (based in part on inertial measurements from the IMU 120). For each epoch - that is, for each coherent integration by the DFT blocks 83, 85, 87 - the frequency control selector 140 selects one of the two Doppler estimates to control the carrier generator 42 (and the code generator 52, via the carrier aiding block 70). When the frequency control selector 140 selects the Doppler estimate produced by the estimator 90, the frequency control is achieved in a manner similar to that of Fig. 1, with closed-loop control. When the frequency control selector 140 selects the Doppler estimate produced by the TIP generator 130, the frequency control is achieved in a manner similar to that of Fig. 2.

The code phase control selector 150 functions in a similar way. It receives two inputs. One input is coupled to an output of the LoS delay and Doppler estimator 90. This provides the code phase control selector 150 with the code phase estimate produced by the measurement engine (that is, by the estimator 90). A second input is coupled to an output of the TIP generator 130. This provides the code phase control selector 150 with the code phase estimate produced from the output of the positioning engine 110 (based in part on inertial measurements from the IMU 120). For each epoch - that is, for each coherent integration by the DFT blocks 83, 85, 87 - the code phase control selector 150 selects one of the two code phase estimates to control the code generator 52. When the code phase control selector 150 selects the code phase estimate produced by the estimator 90, the code phase control is achieved in a manner similar to that of Fig. 1, with closed-loop control. When the code phase control selector 150 selects the code phase estimate produced by the TIP generator 130, the code phase control is achieved in a manner similar to that of Fig. 2.

Both the estimator 90 and the TIP generator 130 produce code phase estimates at the lower rate (for example, 1 Hz). They both produce Doppler estimates at the higher rate (for example, 50 Hz). The frequency control selector 140 and the code phase control selector 150 can select between their inputs independently. This makes the operation mode of Fig. 3 as flexible and adaptable as possible. In this context, the operation mode of Fig. 2 can also be seen as a simplified version of that of Fig. 3.

The selections of which estimates are used to drive the NCOs 44 and 54 be made in a variety of ways. According to the present example, the selection is made based on an examination of the consistency between the pairs of estimates.

The frequency control selector 140 compares the Doppler estimate produced by the estimator 90 with that produced by the TIP generator 130. If the two estimates are in agreement (that is, if an absolute difference between them is less than a predetermined threshold) then the frequency control selector 140 selects the Doppler estimate produced by the estimator 90 for the current epoch. Otherwise, the frequency control selector 140 selects the Doppler estimate produced by the TIP generator 130.

The code phase control selector 150 compares the code phase estimate produced by the estimator 90 with that produced by the TIP generator 130. If the two estimates are in agreement (that is, if an absolute difference between them is less than a predetermined threshold) then the code phase control selector 150 selects the code phase estimate produced by the estimator 90 for the current epoch. Otherwise, the code phase control selector 150 selects the code phase estimate produced by the TIP generator 130.

Without wishing to be bound by theory, it is believed that the Doppler and code phase estimates produced by the measurement engine (that is, by the estimator 90) will usually be more accurate than those produced by the TIP generator 130, provided signal reception conditions are good. When signal reception conditions are bad, the measurement engine may begin to lose its lock on the GNSS signal, and one or both estimates produced by the measurement engine may therefore drift away from those produced by the TIP generator 130. By detecting this, according to the operation mode of Fig. 3, the system can switch to the more reliable estimate(s) produced by the TIP generator 130.

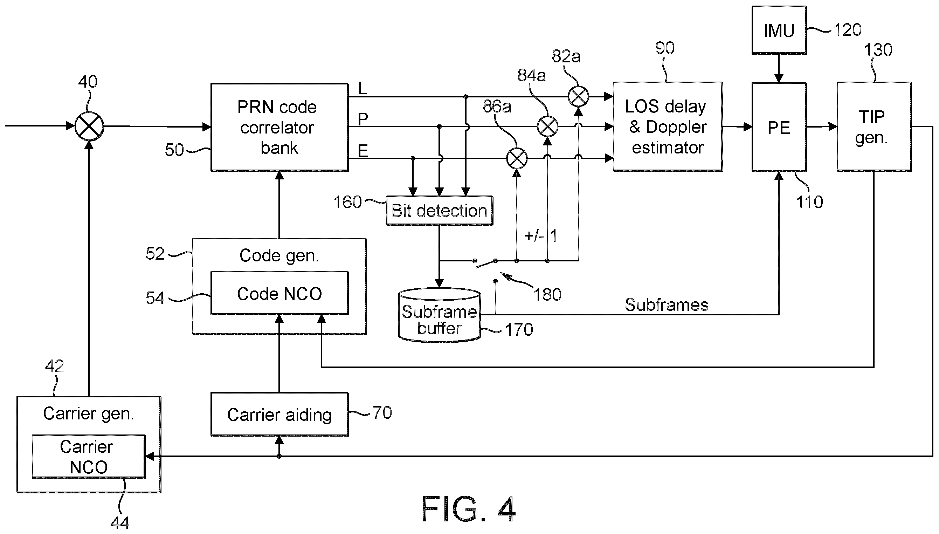

The block diagram of Fig. 4 illustrates a variant of the example of Fig. 2. The main difference between the example of Fig. 2 and the example of Fig. 4 is in the way in which bit detection and removal is performed. In Fig. 4, the bit removal blocks are depicted explicitly as multipliers 82a, 84a, 86a. Each multiplier receives as input one of the complex correlator outputs (late, prompt, and early, respectively) from the bank 50 of correlators. Each multiplier 82a, 84a, 86a multiplies the respective complex correlator output by either +1 or -1, according to the data bit believed to be modulated on the complex correlator output. The values of these data bits may be determined in one of several ways. When the values of the data bits are not available, the multipliers 82a, 84a, 86a may resort to sample squaring (as discussed in greater detail later below).

A GNSS receiver operating in the mode of operation of Fig. 4 includes a bit detector 160 and a buffer 170. A switch 180 is also provided. The switch 180 is configured to selectively couple either an output of the bit detector 160 or an output of the buffer 170 to the multipliers 82a, 84a, 86a.

As shown in the diagram, the inputs of the bit detector 160 are coupled to the outputs of the bank 50 of correlators. The bit detector 160 receives the complex-valued correlator outputs and evaluates the average signal-to-noise ratio of each tap (that is, late, prompt, and early, respectively). The correlator tap with the highest signal-to-noise ratio is selected for bit detection. The complex IQ samples from this tap are further integrated for the duration of one bit (for example, 20 ms). Here, it is assumed that bit synchronisation has already been achieved, such that the timing of the bit edges is known.

The result of the integration is a complex-valued result associated with each bit period. The bit detector 160 compares the complex valued integration results for successive bit periods to detect bits. Phase shift keying (PSK) - in particular, binary phase shift keying (BPSK) - is commonly used to modulate data messages on GNSS signals. Accordingly, in some examples, the bit detector detects the bit value by comparing the complex phase angle of the integration results associated with successive bit periods. When the phase shift (phase angle difference) is below a threshold (for example, 90°) one bit value (for example, +1) is detected; otherwise, the opposite bit value (for example, -1) is detected.

The bits detected by the bit detector 160 may be stored in the buffer 170, for later use. An output of the buffer 170 is coupled to the positioning engine 110. Once enough bits have been detected and stored, the positioning engine 110 can decode the navigation message and evaluate the ephemeris.

In certain circumstances, the "freshly" detected bits from the bit detector 160 may be passed via the switch 180 directly to the bit removal multipliers 82a, 84a, 86a, where they are used to wipe off the bits from the complex-valued correlator outputs. (Note that the correlator outputs may be provided to the multipliers 82a, 84a, 86a, with a suitable delay - not indicated explicitly in Fig. 4 - to compensate for any delay in the bit detector 160 and align the inputs to the multipliers correctly.)

In certain circumstances, the detected bits from the bit detector 160 are stored in the buffer when they are initially detected and they are retrieved later (by the switch 80 selecting the output of the buffer) to be used by the multipliers 82a, 84a, 86a for bit wipe-off.

Concluding, the detected bits (with values +1 and -1) are fed into all the multipliers 82a, 84a, 86a to remove the bits. If the bits are not detected but retrieved from a buffered subframe, they are also fed into all the bit removal blocks in the form of the multipliers 82a, 84a, 86a.

The selection of whether to use "freshly" detected bits (from the bit detector 160) or buffered bits (from the buffer 170) for bit wipe-off can be made in various ways. According to the present example the selection is based partly on signal quality and partly on the subframe number.

When carrier to noise density ratio ($C/N_0$) is high and bit detection is therefore reliable, the switch 180 selects freshly detected bits from the bit detector 160. Whether $C/N_0$ is "high" can be determined by comparing it with a predetermined threshold.

When C/No is low (e.g., below the predetermined threshold), and bit detection is consequently less reliable, the bit wipe-off is controlled according to the subframe number. If the current subframe is a repeating subframe (sometimes referred to as a periodic subframe), whose bits have previously been stored in the buffer 170, then the switch 180 selects the output of the buffer 170. The previously buffered data bits are retrieved from the buffer 170 and used for bit wipe off by the multipliers 82a, 84a, 86a.

Repeating subframes are those transmitted repeatedly by a satellite within a specific interval. For example, in the case of GPS L1 C/A, subframes 1, 2, and 3 fall into this category. They are repeatedly transmitted with a period of 30 s over an interval of about two hours. This interval (in which the contents of the repeating subframe are predictable from one or more previous instances of the same subframe) defines a validity interval, during which a buffered copy of the repeating subframe can be used for bit wipe-off. Beyond the validity interval (of, for example, two hours) any subframes stored in the buffer are replaced by newly decoded subframes.

Note that it is not required that all instances of a repeating subframe are identical, over the validity interval. The repetition period may correspond to an integer number of subframe instances, which repeat again and again in the same sequence for the duration of the validity interval.

In contrast to repeating subframes, non-repeating subframes contain distinct payloads, which prevent the GNSS receiver from deducing the payload of a current instance of a subframe based solely on a previously buffered instance of that subframe. Each instance of such a subframe has its own unique contents.

Note that the GPS L1 C/A signal is merely an example. Repeating subframes also arise in other GNSS signals/constellations.

In some examples according to the present disclosure, repeating subframes that have a relatively short period of repetition may be preferred to those that have a relatively long period. The longer the period of repetition, the less frequently a given unique instance of the subframe is repeated. This may diminish the benefits of buffering the subframe, in the sense that the rate of re-use is low. Meanwhile, the memory capacity required may increase, because the number of unique instances of the subframe that are needed to fully characterise the repetition-period increases.

In some examples, the GNSS receiver may be configured to buffer (and re-use) subframes that have a repetition-period that is less than one minute. This threshold includes, for example, subframes 1, 2, and 3 of the GPS L1 C/A signal. The almanac subframes of the GPS L1 C/A signal repeat with a period of 12 minutes. They are still repeating subframes, according to the definition given above. However, they are excluded from buffering and re-use if the one-minute threshold (or any other threshold less than 12 minutes) is applied.

When C/No is low (e.g., below the predetermined threshold), and the current subframe is a non-repeating subframe (or a repeating subframe that has not been buffered), the multipliers 82a, 84a, 86a may resort to sample-squaring. This incurs a loss of sensitivity but it may be preferable to using unreliable detected bit values for wipe off.

By wiping off bits differently in different circumstances, the present example can help to ensure that bit wipe-off is performed as completely and as accurately as possible. This can help to prepare the data-free complex-valued correlation results (output by the multipliers 82a, 84a, 86a) for long integration, which in turn can help to increase the sensitivity of the GNSS receiver. In the example of Fig. 4, the data-free complex-valued correlation results (output by the multipliers 82a, 84a, 86a) are passed directly to the LoS delay and Doppler estimator 90, which integrates them and produces at least one GNSS measurement from them. (Alternatively, if signal lock has previously been lost, the estimator 90 may indicate detection of a GNSS signal, rather than immediately producing a GNSS measurement for the current epoch.)

In the example of Fig. 4, the measurement (or declaration of signal lock) is passed to the positioning engine 110 as before. Note that the DFT blocks 83, 85, 87 are omitted from the example of Fig. 4, but they could be included in other examples (between the multipliers 82a, 84a, 86a and the LoS delay and Doppler estimator 90).

The bit detector 160 may be configured to perform a cyclic redundancy check (CRC) on the bits that it detects and to store the bits in the buffer 170 only if the check is successful. This can help to ensure that only correctly detected bits are stored in the buffer 170.

Each subframe stored in the buffer 170 has an associated validity period. After the validity period expires, the stored subframe is no longer used for bit wipe-off. Once the bits of a fresh instance of the subframe have been detected by the bit detector 60 (and they have passed the CRC check) that subframe will once again be available for bit wipe-off.

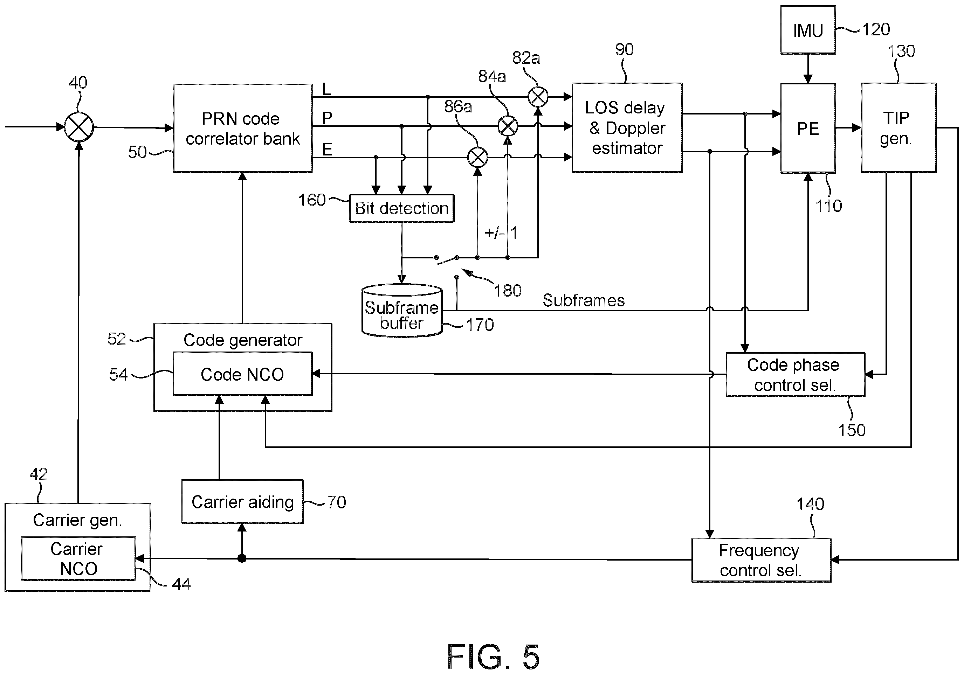

The block diagram of Fig. 5 illustrates an example combining the improved bit detection and wipe-off of Fig. 4 with the mode selection of Fig. 3. This operates in the same way described above for the example of Fig. 3, except that the bit detection and removal is implemented in the manner described for the example of Fig. 4.

According to various aspects of the present disclosure, the operation modes can be used in various configurations. For instance, a GNSS receiver may use exclusively the operation mode of Fig. 4, or exclusively the operation mode of Fig. 5. According to some examples, a GNSS receiver may be configured to implement more than one operation mode. For instance, a GNSS receiver may be configured to implement the operation mode of Fig. 1 and the operation mode of Fig. 4, and select between them in different circumstances. Alternatively, a GNSS receiver may be configured to implement the operation mode of Fig. 1 and the operation mode of Fig. 5, and select between them in different circumstances.

In some examples, a GNSS receiver may be configured to implement three operation modes, and select between them. In one example, if C/No is greater than 37 dB-Hz, or if carrier phase lock is intact, or if the residual is below a predetermined threshold, the signal reception conditions may be categorized as being of good quality for that GNSS signal. In this case Mode 1 (Fig. 1) may be selected for that signal. Mode 3 (Fig. 3) may be selected if the signal is of poor quality (that is, not good quality). Mode 2 (Fig. 2) may be selected if the signal is of poor quality but the receiver is trying to conserve power (since Mode 2 can be considered a simplified version of Mode 3). The variant illustrated in Fig. 4 may be selected in place of Mode 2 (Fig. 2). The variant illustrated in Fig. 5 may be selected in place of Mode 3. It should be understood that the mode selection can be made independently for each GNSS signal being tracked by the receiver. For instance, for a given epoch, Mode 1 may be selected for one or more GNSS signals, and Mode 2 (or Mode 3) may be selected for one or more other GNSS signals.

An optional refinement may be applied, when obtaining Doppler estimates from the TIP generator (based on the output of the positioning engine 110), in the modes of operation of Figs. 2 and 3 (and their variants, in Figs. 4 and 5). Although the TIP generator 130 supplies a Doppler estimate at the higher rate (e.g., 50 Hz), which is the same rate as the estimator 90, there is additional latency in the Doppler estimates produced by the TIP generator 130. One way to help compensate for this is to extrapolate, from the most recent estimates of Doppler frequency, what the Doppler frequency is expected to be at the time of the next update to the carrier NCO 44 and code NCO 54.

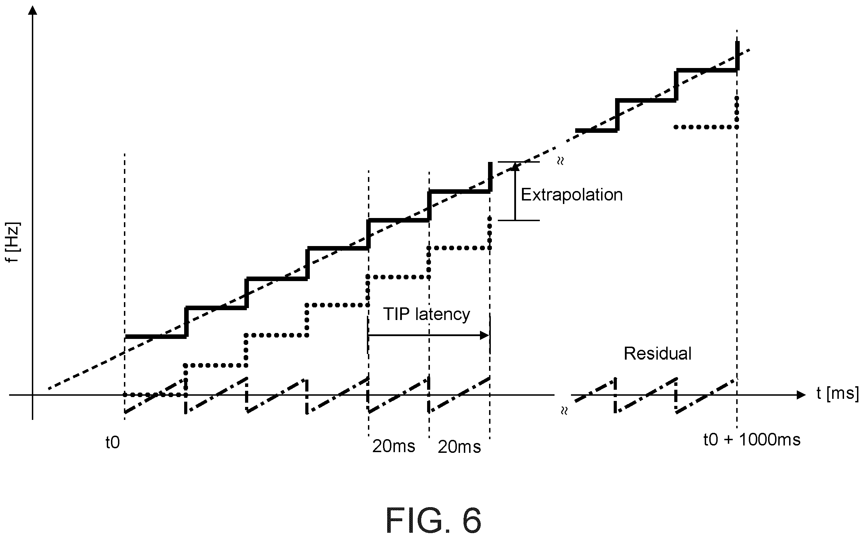

According to the present implementation, Doppler estimates are extrapolated assuming constant acceleration. This assumes a linear relationship between Doppler frequency and time. The instantaneous acceleration (or rate of change of the Doppler frequency) is estimated by comparing the two most recently available Doppler estimates. The TIP generator 130 then extrapolates from the most recent Doppler estimate using the acceleration estimate, to predict the Doppler frequency at the moment the NCOs 44, 54 are next set. This is illustrated in Fig. 6, for a 50 Hz update rate of the NCOs, and an assumed latency of 40 ms. The plots in Fig. 6 represent an interval equal to the coherent integration time of the DFTs (in this example, 1 s).

The dashed line represents the assumed linear function of Doppler frequency with respect to time. In the example illustrated, the frequency is increasing over time. This corresponds to a situation where the GNSS receiver is accelerating towards the satellite. The Doppler frequency is approximated by a piecewise constant function, since the Doppler is estimated and the NCOs are updated every 20 ms. Due to the latency in the system (40 ms, equal to two of the piecewise constant intervals) the Doppler estimates (dotted line) always lag behind the true Doppler frequency (dashed line). When the frequency is increasing, this means that the Doppler estimates lag below the true Doppler. This is shown in Fig. 6 - the lower staircase function (dotted line) represents the Doppler estimates with 40 ms latency. To compensate for this latency, the TIP generator extrapolates upwards, to take account of the (expected) further increase in Doppler frequency over the latent period. The extrapolation assumes that the Doppler frequency will continue to exhibit the same rate of change with respect to time. The extrapolated Doppler estimates are represented by the upper staircase function (solid black line), which better approximates the true (linearly increasing) Doppler frequency. The triangular function (shown in dash-dot) around 0 Hz is the residual Doppler frequency, seen in the complex correlator outputs.

In the current implementation of the GNSS receiver, the blocks 20, 30, 40, 42, 44, 50, 52, and 54 are implemented in dedicated hardware. Blocks 62, 64, 70, 82-87, 82a, 84a, 86a, 90, 110, 120, 130, 140, 150, 160, and 180 are currently implemented in software running on a processor of the GNSS receiver. However, they could alternatively be implemented in dedicated hardware. The buffer 170 is implemented in a memory - for example, a random access memory (RAM).

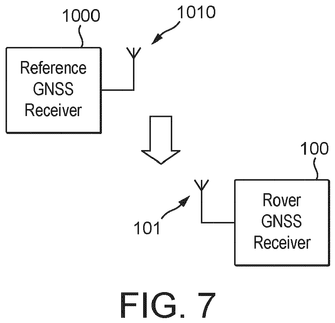

Fig. 7 is a block diagram illustrating a differential GNSS (DGNSS) system according to an example. The DGNSS system comprises a rover GNSS receiver 100 and a reference GNSS receiver 1000. The rover GNSS receiver 100 has an antenna 101 for receiving signals from the reference GNSS receiver 1000. The reference GNSS receiver 1000 has an antenna 1010 for transmitting signals to the rover GNSS receiver 100. In general, the rover GNSS receiver 100 may implement any or all of the modes described above with reference to Figs. 1-5. Those skilled in the art will be familiar with the general principles of DGNSS and they need not be described further here.

Of particular interest are variants of the operation modes illustrated in Fig. 4 and Fig. 5, which are adapted for use in the context of DGNSS. In Figs. 4 and 5, bits were detected by a bit detector 160 incorporated in the (rover) GNSS receiver 100. However, to the extent that the same satellites are visible, and the same GNSS signals are received at both the reference GNSS receiver 1000 and the rover GNSS receiver 100, it is also possible that bit detection may be performed at the reference GNSS receiver 1000. The reference GNSS receiver 1000 may be able to perform bit detection more reliably for various reasons. For instance, it may be static and located with a good view of the sky (for example, in an elevated position away from obstacles and sources of interference). The reference GNSS receiver 1000 may also have a larger and/or more sensitive GNSS antenna (or GNSS antennas) for receiving GNSS signals. The signal-to-noise ratio observed by a correlator at the reference GNSS receiver 1000 may therefore be higher than that observed by any of the correlators in the bank 50 of the rover GNSS receiver 100. The values of bits detected at the reference GNSS receiver 1000 may be transmitted in real time to the rover GNSS receiver 100, via antennas 1010 and 101. They may be used by the rover GNSS receiver 100 in the same way as the bits detected by the bit detector 160 in Figs. 4 and 5 - stored in the buffer 170 and retrieved later for bit wipe-off, or used as "fresh" detected bits and used directly for bit wipe-off.

The example of Fig. 7 assumes a direct wireless (e.g. RF) link between the two GNSS receivers (between the antennas 1010 and 101). However, this is not essential and not limiting on the scope of the present disclosure. In other examples, the detected bits may be communicated from the reference GNSS receiver 1000 to the rover GNSS receiver 100 via some other channel. For example, both GNSS receivers may have a data connection with a cellular communications network, via which the detected bits can be transferred.

It should be understood that the scope of the present disclosure is not limited to the examples described above. Many variations will be apparent to those skilled in the art, based on the foregoing description.

The 20 ms dwells / integration periods for coherent integration described above may be beneficial; however, the method is not limited in this respect. Longer or shorter integration periods may be chosen. The choice may be based on the signal conditions expected or experienced in use. For example, in highly dynamic scenarios, where the receiver is subject to frequent rapid changes in speed and/or direction, a shorter coherent integration period may be desirable, to better cope with the signal dynamics. Conversely, if the receiver is expected to be static, it might be beneficial to extend the coherent integration period - for example, so as to integrate over multiple bit-periods of the GNSS signal.

In the examples above, the measurement engine was described as producing GNSS measurements from the GNSS signal. This is indeed the typical primary purpose of a measurement engine. However, the measurement engine could also (or instead) produce an indication of whether or not the GNSS signal is detected - that is whether a GNSS signal has been acquired, prior to tracking it and/or making GNSS measurements. This may be useful in particular if GNSS signal lock is lost during tracking of a GNSS signal.

Other variations involve the way in which the blocks are implemented. In the example discussed above, certain components were defined in software or software modules running on a processor of the GNSS receiver. However, in other examples, some or all of these units may be implemented in dedicated, fixed-function hardware. Likewise, components that were defined in hardware, according to the examples above, may be defined in software, in other embodiments.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

Further examples will be described in the Appendix below.

Appendix

We present a novel multipath mitigation scheme, based on Sensor-Aided Long coherent Integration (SALI), for Sensor Fusion (SF) Global Navigation Satellite System (GNSS) receivers (RXs). Applied to terrestrial mobile channels in the GNSS downlink, the upgraded SF RX significantly outperforms the conventional SF RX based on ≤20ms coherent integration. The benefits are twofold: higher line-of-sight measurement accuracy in the presence of multipaths and enhanced immunity against non-line-of-sight measurements. Both are achieved with a marked drop of overall computational complexity. An embedded implementation of the SALI-based positioning and measurement engine on a single chip with conventional GNSS accelerators and an ARM Cortex M3 processor is proven feasible. In extensive road tests, conducted in open sky, foliage, suburban and deep urban environments, we analyze the pseudo-range and Doppler errors as well as position fix performance in terms of accuracy, integrity and availability. In addition, we compare those statistics for different carrier-to-noise density ratio (C/NO) and for different rover speeds. We demonstrate that the improved measurement quality translates into substantially enhanced position solutions in all challenging environments. The SALI-based SF RX can run real-time coherent integration of ~1s, perfectly aligned with 1Hz GNSS-based navigation rate. This, in turn, allows for enhanced real-time position output in high-rate such as 100Hz, using sensor-based propagation. In the absence of sensor-aided motion compensation, we introduce a backup solution that runs 100ms coherent integration without estimating Doppler rates explicitly. The shorter snapshots drive a Kalman filter to exploit the inherent motion dynamics. Even here, road test results are considerably improved in multipath rich environments with significant frequency dispersion.

## INTRODUCTION

Multipath (MP) interference poses a substantial challenge for GNSS RXs, impairing positioning accuracy and integrity. A significant amount of research effort has been dedicated to signal processing techniques that mitigate MP effects. Traditional non-parametric techniques that leverage the time-domain correlation include narrow correlators (Van Dierendonck et al. (1992)), strobe correlators (Garin et al. (1996)), Double-Delta (DD) discriminators (McGraw and Braasch (1999)), etc. These techniques are effective against MPs exhibiting substantial delay offsets w.r.t. the Line-Of-Sight (LOS). However, they encounter difficulties with near MPs possessing a delay offset close to the correlator tap spacing. Therefore, they are quite effective in the high C/NO regime, where narrow tap spacing can be applied to fully exploit the capabilities of a large pre-correlation bandwidth without being compromised by code jitter. However, MP scenarios often coincide with a significant drop in C/NO, where time-variant MPs and/or interferers-in addition to noise-increasingly contribute to code jitter (Betz and Kolodziejski (2009)). This challenges the robustness of the Delay-Locked Loop (DLL) and reduces the applicability of a high-resolution delay discriminator that relies on narrow tap spacing. The DLL performance is rather predictable in a quasi-stationary RX, where the DLL can converge to the set-point of the discriminator. In mobile applications, however, DLL's low-pass filtering effect becomes a critical factor when it interacts with time-variant MPs. A narrowband DLL, for instance, exhibits a degree of immunity against dynamic MPs whose relative frequencies to the LOS exceed the DLL bandwidth. This suggests a potential advantage in directly exploiting channel properties in the frequency domain, in addition to the delay domain, to suppress MPs before they reach the discriminator or estimator. On the other hand, we also recognize the benefits of the code tracking agility provided by a wideband DLL that facilitates swift re-convergence to the LOS when transitioning from a Non-Line-Of-Sight (NLOS) environment. Yet, adaptive DLL bandwidth with variable time-constants produces unpredictable correlation among consecutive measurements.

This can lead to underestimation of position errors, challenging integrity monitoring methods, and becoming problematic in safety-critical applications where positioning integrity is paramount. These considerations add layers of complexity to the DLL design. In practice, achieving optimal performance in the presence of MPs requires skillfully balancing multiple design objectives to navigate the trade-offs inherent in real-world scenarios.

It's well-known that a Sensor Fusion (SF) architecture can substantially improve the position fix quality, particularly in GNSS denied environments, by incorporating an additional Inertial Measurement Unit (IMU) into the Positioning Engine (PE) (Schmidt and Phillips (2010); Schmidt and Phillips (2011); Somieski et al. (2010)). Upon proper sensor calibration, the velocity estimation can be enhanced by the IMU, leading to improved MP immunity. Moreover, the accurate velocity estimate can be mapped to LOS Doppler in real-time, making the local oscillator follow Doppler dynamics and largely wipe them off. This in turn improves the tracking performance of conventional Frequency-Locked Loops (FLL) and Phase-Locked Loops (PLL) because of reduced dynamics (Gao and Lachapelle (2008)). On the other hand, the recurring sensor calibration to eliminate cumulative sensor errors still relies on GNSS signal measurements. This implies a persistent error source attributed to MP effects.

With the increasing demand for measurement accuracy, integrity and low power consumption, coupled with the rising availability of pilot signals in the GNSS signal landscape, the principles of long Coherent Integration (CI) find their application in enhancing sensitivity and mitigating MPs (Pany et al. (2009); Cheng et al. (2018); Groves et al. (2020); Xie (2023)). Long CI, when combined with vector tracking in a subset of the position parameters such as the velocity domain (Cheng (2016)), or in the clock offset/drift domain (Cheng (2017)), allows for assessing the log-likelihood metrics in a fine grid with relatively low complexity. In mobile applications, a moving RX with Supercorrelation™ (Faragher et al. (2018)) samples the space during a long CI, which can be interpreted as beam-forming performed by a virtual antenna array. In this regard, a beam towards any arbitrary direction can be formed. Coupled with a suitable counterweight, this can be used for the anti-jamming/spoofing purpose (Faragher et al. (2019)). This way, the CI gain manifests itself in a spatial selectivity, yet only in the presence of antenna motion. The primary challenge in long CI is the signal frequency variation caused by three main factors: the Doppler effect from satellite movement, local clock instability, and the Doppler effect from RX's and/or reflector's mobility. While Doppler dynamics due to satellite movement can be relatively easily predicted and tracked, the other two factors usually require estimation. Without an IMU, dynamics caused by RX motion can be estimated by using alternative transforms that address frequency rates. One of such methods is the fractional Fourier transform, which utilizes a linear chirp basis, as proposed by Luo et al. (2023).

The novelty and contribution of this paper can be summarized as follows.

- We propose a LOS detection/estimation scheme based on SALI, eliminating the need for tracking loops, and reducing the correlation among consecutive measurements. The key departure from the parametric techniques bases on Expectation-Maximization (EM) (Feder and Weinstein (1988); van Nee (1992); Fleury et al. (1999); Lentmaier et al. (2008)) lies in the reduction of the EM iterations to just once, exclusively in the LOS parameter subspace. After a single E-step, realized by SALI using the IMU-aided LOS estimates as initial values, a part of the MPs is suppressed by the long CI with significantly mismatched MP signatures to the LOS hypothesis, and the rest MPs remain detectable. In the single subsequent M-step, MPs are detected when possible in addition to the LOS, to distinguish the LOS. Moreover, we introduce methods to exclude NLOS measurements, and indicate the level of MP interference that potentially affects a measurement. We analyze the reference time of the input signal, to which a SALI-based LOS measurement is applicable, and the robustness of the PE/ME close-loop, in the presence of measurement and PE feedback errors.

- In the frequency domain, we achieve MP separation and suppression by SALI, particularly for time-variant channels with non-negligible Doppler spread. In the delay domain, we apply linear interpolators to the correlator taps, aiming to 1) mitigate the remaining MPs with indiscernible Doppler to the LOS, in one step without DLL iterations, and 2) enhance the precision of the coarse provisional delay estimates on a discrete grid. Specifically, we introduce two interpolators that mimic the behavior of the well-known DD-DLL, while approaching the set-point in one step, taking advantage of the increased Signal-to-Noise Ratio (SNR) at all correlator taps due to SALI.

- We propose utilizing the Gabor transform with an adaptive Gaussian window curvature for the long CI. This approach complements the Discrete Fourier Transform (DFT), targeting not only the suppression of spectral side lobes, but also the enhancement of robustness against residual Doppler dynamics due to sensor or heading errors.

- In the absence of the IMU-aided motion compensation, we propose to cut the CI length from 1s to 100ms, without explicitly estimating the LOS Doppler rate in each measurement epoch. Here, we use a Kalman Filter (KF) to exploit the channel dynamics across consecutive snapshots.

- Our study showcases the feasibility of SALI as a low-complexity scheme running on a single-chip GNSS RX, with identical hardware accelerators serving a conventional SF RX. In this design, both the Measurement Engine (ME) and the PE efficiently share the computational capacity of a single ARM Cortex M3 processor in real-time.

- For a fair comparison, the SALI-based SF RX is tested against the same SF architecture employing conventional carrier and code tracking loops. In each individual environment, including open sky, foliage, suburban and deep urban, from a comprehensive road test campaign across the globe, we compare the delay and Doppler error statistics, as well as position fix statistics, in terms of accuracy, integrity and availability. In addition, we compare and interpret those statistics for different C/NO as well as for different rover speeds.

The remainder of the paper is organized as follows. We first present a signal model that combines LOS geometry and stochastic properties of time-variant MP channels. Next, we introduce SALI and discuss its sensitivity to various MP effects and sensor-aiding errors. Based on the SALI output, we derive the LOS detection and estimation algorithm, and discuss the reference time of the measurements, robustness and the MP mitigation capability in the presence of various channel characteristics. We then introduce three low-complexity delay interpolators, and discuss their performance w.r.t. the well-known DD-DLL. To further enhance the robustness in the absence of sensor aiding, we propose to use shorter CI time in combination with a KF. We present road test results related to measurement errors, positioning accuracy, integrity, and availability. These results are categorized by various environments, and we discuss their implications. Finally, we summarize the results, and present the advantage and disadvantage of the proposed SALI-based SF RX, along with an outlook for the future research.

## SIGNAL MODEL

Throughout the paper, we use the following math notations. A function of a continuous or discrete variable $u$ is denoted by $y(u)$ or $y[u]$, respectively. Parameters can be added to a function, such as $\psi$ and $\rho$ in $y(u; \psi, \rho)$. The first derivative, absolute value and complex conjugate of $y$ are denoted $y'$, $|y|$ and $y^*$, respectively. The imaginary unit $\sqrt{-1}$ is denoted by $\jmath$. The Euclidean distance between two functions $y(.)$ and $z(.)$ is denoted by $\|y(.) - z(.)\|$. A Random Variable (RV) without any accent denotes the unknown truth, $\hat{}$ denotes the estimate, and $\bar{}$ denotes the corresponding estimation error, respectively. Since the latter is also an RV, its value can be estimated, and the error estimate is denoted by $\overset{\triangle}{\cdot}$ consequently.

The baseband received signal, $r(t)$, is modeled as a LOS component indexed by $l = 0$ superimposed with $L$ MP components indexed by $l = 1, 2, \ldots, L$ in (1). The sum is corrupted by Additive White Gaussian Noise (AWGN) $n(t)$ with a double-sided noise power spectral density of $N_0/2$.

$$r(t) = \sum_{l=0}^{L} \sum_{k=0}^{K-1} h_l[k] e^{j\phi_l[k]} x(t - kT - \tau_l[k]) + n(t). \qquad (1)$$

Here, the piece-wise constant complex amplitude, $h_l[k]$, for path $l$ in code period $k$ during interval $t \in [kT, (k+1)T)$ is modelled as an RV following certain fading statistics. $T$ represents the spreading code period, such as $T = 1\text{ms}$ for GPS L1CA. The geometry-based carrier phase and propagation delay for path $l$ in code period $k$ are represented by $\phi_l[k]$ and $\tau_l[k]$, respectively. Both are RVs, influenced by the RX, satellite movement and the ray-tracing geometry of path $l$. The spreading code waveform denoted by $x(t)$ is defined within the interval of $t \in [0, T)$, as a result of a chip pulse waveform convolved with the binary spreading code sequence. This implies that code period $k = 0$ begins with $t = 0$. For simplicity, we also assume that the modulating bits or secondary codes are removed during the entire observation interval of $t \in [0, KT)$, which is ~1s in our study. An obstructed path corresponds to $|h_l[k]| = 0$. The magnitude and phase of $h_l[k]$ undergo a relatively small variation in the presence of Rician fading. This can be a visible LOS path or specular reflections with long-lasting lifespans. In case of Rayleigh fading such as in NLOS environments, the phase can be assumed uniformly distributed in $[0, 2\pi)$ and the fading rate is subject to the path coherence time. Here, the composite carrier phase in $h_l[k] e^{j\phi_l[k]}$ can be dominated by the geometric or stochastic characteristics. Furthermore, for terrestrial mobile channels, we can approximate the geometric LOS dynamics at $t = kT$ with instantaneous velocities, $v_0[k]$, which results from projecting the relative velocity between the RX and the satellite to the LOS vector. The LOS range in code period $k$ differs from that in $k = 0$ by $d_0[k] = \sum_{i=0}^{k-1} v_0[i]T$. This leads to the following LOS carrier phase, delay and frequency in code period $k$:

$$\phi_0[k] = \phi_0[0] + \frac{2\pi}{\lambda} d_0[k], \qquad \tau_0[k] = \tau_0[0] + \frac{d_0[k]}{c}, \quad \text{and} \qquad f_0[k] = \frac{v_0[k]}{\lambda},$$

with $\lambda$ and $c$ being the wavelength and the speed of light. For MPs ($l > 0$), the same mechanics govern the evolution of $\phi_l[k]$, $\tau_l[k]$ and $f_l[k]$. However, the propagation path geometry is generally unknown without information about reflector positions, and projecting the RX velocity to ray-tracing paths is not feasible. On the other hand, it is not required to do so because the long CI is exclusively computed w.r.t. the LOS component, as will be elaborated in the next sections.

Note that in (1), we disregard the impact of local clock instability, which can lead to Doppler and delay dynamics in the received signal $r(t)$ as well. The rationale behind this simplification is the fact that our hardware platform, which effectively manages thermal coupling, exhibits satisfactory frequency stability for the observation window of 1s, even in the presence of vibration. This assumption is not overly ambitious for dedicated GNSS RXs, and we can tolerate minimal clock drift and offset in each measurement epoch without the need to estimate and remove them separately.

### SALI

We follow a feedforward detection and estimation strategy, under the maximum likelihood framework. To that end, we model the local replica in (2), focusing exclusively on the LOS component with the frequency and delay hypothesis, $f, \tau$.

$$s_0(t; f, \tau) = \sum_{k=0}^{K-1} e^{j(\hat{\phi}_0[k] + 2\pi f kT)} x\left(t - kT - (\hat{\tau}_0[k] + \tau)\right). \qquad (2)$$

Here, $\hat{\phi}_0[k]$ and $\hat{\tau}_0[k]$ are the phase and delay estimate of the LOS path. They are used to control the carrier and code generator, respectively, to track the signal in code period $k = 0, 1, \ldots, K - 1$. In an SF RX, both are derived from the IMU-aided LOS velocity estimate, $\hat{v}_0[k]$, as follows:

$$\hat{\phi}_0[k] = \hat{\phi}_0[0] + \frac{2\pi}{\lambda} \sum_{i=0}^{k-1} \hat{v}_0[i]T, \qquad\qquad \hat{\tau}_0[k] = \hat{\tau}_0[0] + \frac{1}{c} \sum_{i=0}^{k-1} \hat{v}_0[i]T,$$

where $\hat{\phi}_0[0]$ and $\hat{\tau}_0[0]$ represent the initial phase and delay estimate that are applied to the carrier and code generator at $t = 0$. In addition, the IMU-aided LOS frequency estimate during $t \in [kT, (k+1)T)$ is given by $\hat{f}_0[k] = \hat{v}_0[k]/\lambda$. Without compromising the system behavior, we ignore the latency of the feedback control in this section. Upon defining the phase and delay difference of all $L + 1$ paths against the LOS estimates, as $\bar{\phi}[k] = \phi_l[k] - \hat{\phi}_0[k]$ and $\bar{\tau}[k] = \tau_l[k] - \hat{\tau}_0[k]$, the correlation function of $s_0(t; f, \tau)$ and $r(t)$ reads

$$
\begin{aligned}
R(f, \tau) &= \int_{-\infty}^{\infty} W(t) r(t) s_0^*(t; f, \tau) \mathrm{d}t \\
&\approx \nu + \sum_{l=0}^{L} \sum_{k=0}^{K-1} W[k] h_l[k] e^{j(\bar{\phi}_l[k] - 2\pi f kT)} \int_{-\infty}^{\infty} x(t - kT - \tau_l[k]) x^*(t - kT - (\hat{\tau}_0[k] + \tau)) \mathrm{d}t \\
&= \nu + \sum_{l=0}^{L} \sum_{k=0}^{K-1} W[k] h_l[k] e^{j\bar{\phi}_l[k]} \Lambda\left(\bar{\tau}_l[k] - \tau\right) e^{-j2\pi f kT} \\
&= \nu + \sum_{l=0}^{L} R_l(f, \tau).
\end{aligned}
\tag{3}
$$

Here, RV $\nu = \int_{-\infty}^{\infty} n(t) s_0^*(t; f, \tau) \mathrm{d}t$ with variance $KTN_0/2$ represents the integrated AWGN, and a Gaussian window, $W(t) = \exp[-\pi\alpha(t - KT/2)^2]$ sampled at $t = kT$ to $W[k]$, is applied to the post-code-correlation samples. Considering the MP signal model (1) and the LOS hypothesis (2) without any MPs, we recognize that the correlation in (3) corresponds to the evaluation of a partial log-likelihood function. In fact, this represents a single E-step in the Space-Alternating Generalized EM (SAGE) algorithm, provided the latter starts the first EM iteration in the LOS parameter subspace (Fleury et al. (1999)), using the sensor-aided estimates as initial values. The sum in (3) includes the auto-correlation of the LOS path, plus all the cross-correlations between the LOS hypothesis and MPs. This ensures a maximum CI gain for the LOS path, while allowing MPs to either concentrate in their respective frequency bins, or diminish due to cross-correlation with significantly mismatched signatures compared to the LOS hypothesis. The correlation of the LOS hypothesis and path $l \geq 0$ reads

$$
R_l(f, \tau) = \sum_{k=0}^{K-1} W[k] h_l[k] e^{j\bar{\phi}_l[k]} \Lambda\left(\bar{\tau}_l[k] - \tau\right) e^{-j2\pi f kT} \quad \text{with} \qquad \Lambda(\tau) = \begin{cases} 1 - |\tau|/T_c & \forall \tau \in [-T_c, T_c], \\ 0 & \text{elsewhere .} \end{cases}
\tag{4}
$$

The Gaussian windowing followed by DFT effectively computes the Gabor transform of the samples, with a fixed window displacement to the center of the observation interval $KT$. A tuning coefficient $\alpha$ shapes the curvature of the window. In this paper, we assume infinite bandwidth and an ideal spreading code auto-correlation function, $\Lambda(\tau)$, with chip duration $T_c$. For an observation window of ~1s, we approximate the velocity and range difference of path $l$ in code period k against the IMU-aided LOS estimates with second order dynamics as follows:

$$
\bar{v}_l[k] = v_l[k] - \hat{v}_0[k] \approx \bar{v}_l[0] + \bar{a}_l kT, \qquad\qquad \bar{d}_l[k] = d_l[k] - \hat{d}_0[k] \approx \bar{d}_l[0] + \bar{v}_l[0]kT + \frac{1}{2}\bar{a}_l k^2 T^2,
\tag{5}
$$

where $\bar{v}_l[0]$ and $\bar{d}_l[0]$ are the initial velocity and range difference between path $l$ and the LOS estimate. A constant rate of change in velocity difference is denoted by $\bar{a}_l$. Note that $\bar{v}_l[k]$ and $\bar{d}_l[k]$ exclusively represent estimation errors of the LOS path for $l = 0$, and for any other paths they are merely a difference in the cross-correlation. However, for simplicity, we refer to them and the same type of differences collectively as "error" for all paths $l \geq 0$ in the following discussion. By considering the wavelength and the speed of light, we can convert (5) to the following phase, delay and frequency error of path $l$, respectively,

$$
\bar{\phi}_l[k] = 2\pi \frac{\bar{d}_l[k]}{\lambda} = 2\pi \frac{\bar{d}_l[0]}{\lambda} + 2\pi \frac{\bar{v}_l[0]}{\lambda} kT + \frac{1}{2} \frac{2\pi \bar{a}_l}{\lambda} k^2 T^2 = \bar{\phi}_l[0] + 2\pi \bar{f}_l[0] kT + \pi \bar{f}'_l k^2 T^2,
\tag{6}
$$

$$\bar{\tau}_l[k] = \frac{\bar{d}_l[k]}{c} = \frac{1}{c}\left(\bar{d}_l[0] + \bar{v}_l[0]kT + \frac{1}{2}\bar{a}_l k^2 T^2\right), \qquad (7)$$

$$\bar{f}_l[k] = f_l[k] - \hat{f}_0[k] = \frac{\bar{v}_l[k]}{\lambda},$$

with $\bar{\phi}_l[0] = 2\pi\bar{d}_l[0]/\lambda$, $\bar{f}_l[0] = \bar{v}_l[0]/\lambda$ and $\bar{f}'_l = \bar{a}_l/\lambda$ representing the initial phase error, initial frequency error and constant frequency error rate of path l, respectively. Notice that the underlying error signal exhibits carrier dynamics of a linear chirp.

(a) Rover trajectory and channel conditions (LOS + one MP)     (b) Doppler dynamics

**Figure 1:** IMU-aided LOS tracking in MP environment

FIGURE 1 shows the simulation of an artificial scenario with a LOS path plus one MP, both originating from a satellite at a low elevation of ~ 0°. Here, a rover initially travels eastward in a straight line at 50 km/h for 1s. In the following second, it takes a 90° turn to the south along a circular path while maintaining the constant linear speed, reaching an acceleration of 2.2g. The LOS originates from the east, and the MP from azimuth 210° persists for the entire 2s. A heading error of constant 3° is assumed for the IMU-aided velocity estimate throughout the 2s duration. Doppler values in FIGURE 1b reveal that both the frequency error and its rate remain consistently low for the LOS signal, irrespective of linear motion or navigating a curve because the LOS path is closely tracked by the IMU-aided SF solution. However, for MP components, the frequency error can be large already during the linear motion. Additionally, the frequency error rate can be high given non-zero rover acceleration.

The impact of $\bar{f}_l[0]$, $\bar{f}'_l$ and $\bar{\tau}_l[k]$ on the correlation in (4), given small frequency errors, can be analyzed by neglecting the amplitude variation in $h_l[k]$, and approximating the vicinity of the correlation peak by splitting the spreading code correlation, $P_l(\tau)$, from the sinusoidal correlation, $Q_l(f)$,

$$R_l(f,\tau) \approx P_l(\tau)Q_l(f) \quad \text{with} \quad P_l(\tau) = \frac{h_l[0]}{K}\sum_{k=0}^{K-1}\Lambda\left(\bar{\tau}_l[k] - \tau\right) \quad \text{and} \quad Q_l(f) = \sum_{k=0}^{K-1}W[k]e^{j\bar{\phi}_l[k]}e^{-j2\pi fkT}. \qquad (8)$$

Both $P_l(\tau)$ and $Q_l(f)$, which is the Gabor transform of a linear chirp, can be expressed in closed form. However, it suffices to analyze their global maximum, which is crucial for subsequent path detection and estimation.

According to (7), $\bar{\tau}_l[k]$ wanders along $\Lambda(.)$ for non-zero $\bar{f}_l[k]$ when summing over $k \in [0, K - 1]$ given any specific delay hypothesis $\tau$. As a result, the peak of $P_l(\tau)$ is flattened and displaced in comparison to the case of $\bar{f}_l[k] = 0$. It can be shown, that for $\bar{f}'_l = 0$, $P_l(\tau)$ is deformed to a parabola around the peak, which is displaced by $(KT12)\,f_l[0]\lambda/c$, as shown in FIGURE 2a. The resulting delay associated with the maximum corresponds to the delay of the signal at $t = KT/2$. If, however, the remaining frequency error rate is non-zero and unknown, as we intentionally do not estimate $\bar{f}'_l$, the offset of the $P_l(\tau)$ peak remains uncertain in general. This implies a minimal yet noticeable delay estimation error, especially in high dynamic situations, and even in perfect open sky conditions.

On the other hand, even without the knowledge of $\bar{f}'_l$, the Gabor transform consistently shifts the spectrum peak of $Q_l(f)$ by $(KT/2)\bar{f}'_l$ for small $\bar{f}'_l$, as shown in FIGURE 2b. Here, the frequency error estimate associated with the spectrum peak is relevant to the time at $t = KT/2$, regardless of the value of $\bar{f}'_l$. With an increasing frequency error rate, the spectrum becomes more dispersive, resulting in a lower global maximum that can even appear at a different frequency than $(KT/2)\bar{f}'_l$, as shown in FIGURE 2b. This phenomenon is counterproductive for the LOS Doppler estimation. To mitigate its impact, one approach is to choose a larger value for $\alpha$. This produces a narrower window that also attenuates the spectrum sidelobes more than a broad window. However, narrower windows reduce the peak SNR, diminishing the detection sensitivity. In practice, this leads to a trade-off conditioned by propagation channel characteristics and the sensor aiding error properties.

**(a)** Spreading code correlation mag., $|P_l(\tau)|$     **(b)** Spectrum mag., $|Q_l(f)|$, with window coef. $\alpha = 1$

**Figure 2:** Impact of frequency error and its rate on 1s CI

Obviously, the Doppler error rate over the integration interval is a critical factor that can impact the robustness of SALI. Simulations of the IMU-aided frequency tracking in our study exhibit a maximum of 4Hz/s under a relaxed heading error assumption. This justifies the omission of explicit frequency error rate estimation. Considering MP components, a large frequency error rate can be rather beneficial for LOS estimation, especially when the initial MP Doppler is hardly discernible from that of the LOS. In such cases, the increased frequency error rate scatters the MP power, effectively reducing its interference to the LOS correlation.

## SALI-BASED LOS DETECTION AND ESTIMATION

**Figure 3:** SALI-based LOS detection and estimation

The problem of LOS parameter measurement can be formulated as deriving an estimate, $\hat{\bar{f}}_0, \hat{\bar{\tau}}_0$, of the frequency and delay errors, $\bar{f}_0[k], \bar{\tau}_0[k]$, associated with the initial sensor-aided estimates, $\hat{f}_0[k], \hat{\tau}_0[k]$, for $k = \lfloor K/2 \rfloor$, by evaluating $R(f, \tau)$. In the SAGE context, as explained w.r.t. the correlation in (3), the procedure here corresponds to the single M-step in the LOS parameter subspace. Since no further EM iterations are planned to strip the paths individually, all detectable paths after the preceding E-step must be identified during the single M-step to differentiate the LOS. In particular, we apply a detection threshold $\eta$ to $|R(f, \tau)|$ to detect multiple local maxima associated with individual paths. This resembles an aided acquisition, with the key difference being that multiple paths, rather than just the strongest one, are detected. From the detected paths, we identify the one with the shortest delay as the LOS. Its discrete delay and frequency values linked to the correlation peak on the hypothesis grid are then interpolated to obtain a more precise estimate. Finally, we conclude the measurement epoch by reporting the LOS estimates w.r.t. the reference time of $t = KT/2$. FIGURE 3 presents the block diagram that implements ALGORITHM 1 in a single-chip SF RX with conventional GNSS accelerators.

**ROBUSTNESS**

In general, SALI operates with minimal reliance on prior knowledge or assumptions about the channel model, e.g., the number of existing paths. Despite similarities in the first EM-iteration w.r.t. the LOS, the weak dependency on channel assumptions distinguishes SALI from the iterative joint parameter estimators such as SAGE, and contributes to its robustness in single measurement epochs. However, since we are dealing with a feedback control loop involving both ME and PE, robustness over consecutive epochs regarding initial conditions in each epoch is still a critical concern. Beyond the earlier discussion on frequency error rates, it's crucial to examine the frequency and delay hypothesis window. This window must strike a balance:

---

**Algorithm 1** SALI-based LOS detection and estimation

**Require:** Real-time tracking of $r(t)$ with ME controlled by $\hat{\phi}_0[0], \hat{\tau}_0[0], \hat{f}_0[k]$ for $k = 0, 1, 2, \ldots, K-1$;
**Ensure:** Approximation (5) holds, and $\bar{f}'_0$ is sufficiently small;
**Require:** Definition of hypothesis windows, $\tau \in [\tau_{\min}, \tau_{\max}]$ and $f \in [f_{\min}, f_{\max}]$;
**Ensure:** Proper hypothesis window coverage: $|\bar{\tau}_0[k] - \tau| \leq T_{\mathrm{c}}$ and $f_{\min} \leq \hat{f}_0[0] + \bar{f}'_0 KT/2 \leq f_{\max}$;

1:   $\hat{\bar{\tau}}_0 \leftarrow \infty$;
2:   $\hat{\bar{f}}_0 \leftarrow 0$;
3:   **for all** $f \in [f_{\min}, f_{\max}]$ **do**
4:     $\tau_l \leftarrow \arg\max_\tau |R(f, \tau)|$, c.f. (3);
5:     **if** $|R(f, \tau_l)| > \eta$ **then**
6:       $\tau_l \leftarrow$ interpolate $\tau$ in the vicinity of $\tau_l$ based on $|R(f, \tau)|$ given specific $f$;
7:       **if** $\tau_l < \hat{\bar{\tau}}_0$ **then**
8:         $\hat{\bar{\tau}}_0 \leftarrow \tau_l$;
9:         $\hat{\bar{f}}_0 \leftarrow f$;
10:       **end if**
11:     **end if**
12: **end for**
13: $\xi \leftarrow$ calculate MP indicator $\|R(\hat{\bar{f}}_0, \tau) - \Lambda(\tau - \hat{\bar{\tau}}_0)\|$;
14: $\hat{\bar{f}}_0 \leftarrow$ interpolate $f$ in the vicinity of $\hat{\bar{f}}_0$ based on $|R(f, \hat{\bar{\tau}}_0)|$ given $\hat{\bar{\tau}}_0$;
15: **return** LOS delay estimate, $\hat{\tau}_0[\lfloor K/2 \rfloor] + \hat{\bar{\tau}}_0$, LOS frequency estimate, $\hat{f}_0[\lfloor K/2 \rfloor] + \hat{\bar{f}}_0$ and MP indicator, $\xi$;

---

it needs to be large enough to encompass the LOS frequency and delay errors associated with IMU-aided signal tracking over the integration interval, while also being as small as possible to achieve two objectives: 1) keeping as many as possible MP correlation peaks outside the LOS hypothesis window to guard against the NLOS situation, and 2) ensuring a high resolution of the hypothesis grid, given limited computational resources. Furthermore, it's essential to take into account additional errors arising from feedback control latency when determining the size of the hypothesis window, while minimizing the latency remains best practice. Neglecting the impairment from remaining MP interference, interpolation error and the unknown frequency error rates, the estimator can provide unbiased estimates of LOS parameters. This process augments the initial IMU-aided estimates by leveraging the received signal within the maximum likelihood framework. Error propagation between ME and PE is inherently precluded by design.

If the initial LOS estimate from PE is biased in such a way that the true LOS parameters lie outside the hypothesis window, we're confronted with a false NLOS situation, where all correlation peaks within the window are attributed to MPs. Whether in a false or true NLOS scenario, our preference in the context of safety critical applications is to refrain from producing a measurement and default to an NLOS declaration, awaiting the next measurement epoch. In addition to SALI's inherent capability of excluding MP correlation peaks out of the narrow hypothesis window, various methods can be employed to enhance the NLOS exclusion. One possibility is to set the detection threshold $\eta$ to a C/N0 level, below which the majority of the detected paths are expected to originate from NLOS Rayleigh fading sources according to channel models such as Lehner (2007). The other approach stems from the SNR saturation effect observed in long CI under Rayleigh fading conditions (Broumandan et al. (2011)). Specifically, the resulting SNR gap between a Rician and Rayleigh faded signal grows with the increasing CI length and the decreasing channel coherence time. Correspondingly, we can monitor the rate of SNR growth during each SALI epoch to differentiate the realization of a Rician (LOS present) and Rayleigh faded NLOS scenario.

Another robustness concern is the outage of IMU aiding, which is not only an abnormal state but also expected in practice, such as before sensor calibration is completed. This typically prevents the long CI due to the lack of motion compensation required by SALI. As a backup solution, we propose to reduce the CI length from 1s to 100ms without estimating the Doppler rate in each measurement epoch. The resulting spectrum dispersion of the LOS component remains acceptable up to 2g acceleration. The LOS parameter estimates, obtained from 100 ms snapshots, drive a KF in individual tracking channels. This KF tracks the inherent motion dynamics, in conjunction with a 1 Hz navigation rate. Note that in the nominal operation mode, as previously explained, the exchange of information between the ME and the PE occurs sequentially, making the additional tracking loops in ME redundant, as the navigation filter effectively handles rover dynamics tracking. Although it's possible to configure the nominal mode for 100ms CI, which implies a navigation rate of 10Hz, the MP mitigation effect will be diminished because of the tenfold degraded frequency resolution compared to the 1s SALI. This also implies that for high-rate position output, it's advisable to run sensor-propagation between two consecutive nominal SALI-based solutions with a 1s CI.

## DELAY AND FREQUENCY INTERPOLATION

In practice, the correlation function $R(f, \tau)$ is sampled on a discrete grid over $f$ and $\tau$. To achieve the optimum estimation accuracy, an interpolation is needed. The frequency interpolation in STEP 14 of ALGORITHM 1 is straightforward. For instance, a quadratic interpolation of frequency bins around the spectrum peak already provides sufficient accuracy.

To deal with MPs carrying indiscernible Doppler to the LOS, we further incorporate MP mitigation into the delay interpolator. In scenarios with minimal Doppler spread, such as stationary receiving conditions, this is particularly beneficial because SALI gradually loses the capability of separating MPs in the frequency domain, when all paths tend to produce their spreading code correlation function $P_l(\tau)$ on the same frequency. Here, we follow the same design principles of multiple early-late gates utilizing narrow tap spacing. However, we replace the DLL iteration by a one-shot interpolator in STEP 6 of ALGORITHM 1, taking advantage of the 1s CI gain compared to 20ms in conventional DLLs. In particular, we explore three delay interpolators. All operate with identical prerequisites, namely the maximum of $|R(f, \tau)|$ for a specific $f$ has been detected as $A[m] = |R(f, \tau[m])|$ at delay tap $m$. Its relative delay to the reference delay, $\hat{\tau}_0\lfloor\lfloor K/2 \rfloor\rfloor$, configured at tap 0 is $m\Delta$ with $\Delta$ denoting the tap spacing. In addition, several early taps $A[m - 1]$, $A[m - 2]$,..., $A[m - M]$ and late taps $A[m + 1]$, $A[m + 2]$,..., $A[m + M]$ associated with the same $f$ are also required.

1. Double-Delta Interpolation (DDI): For sufficiently large number of taps, it's possible to sample the S-curve of a desired discriminator in its linear region. By fitting the S-curve samples, $S[i]$ w.r.t. to tap $i$, to a target shape, we can approximate the S-curve on a continuous delay axis, and solve the zero-crossing equation. The solution corresponds to the refined delay estimate. As an example, we pick the well-known S-curve of a DD discriminator with $\Delta = T_c/8$, sample it at three points, $i = m$ and $i = m \pm 1$, with equal spacing of $T_c/16$, and fit them to a straight line with least-squares fitting.

2. Early-Late Line Intersection (ELLI): The refined delay estimate corresponding to the intersection point of the two straight lines defined by the early taps $A[m - 1]$ and $A[m - 2]$, and the late taps $A[m + 1]$ and $A[m + 2]$ is given by

$$\hat{\hat{\tau}}_0 = \Delta \left( m + \frac{2(A[m - 1] - A[m + 1]) - (A[m - 2] - A[m + 2])}{(A[m - 2] + A[m + 2]) - (A[m - 1] + A[m + 1])} \right). \tag{9}$$

It turns out that the numerator in (9) represents the output of a DD discriminator. At its set-point, this term approaches zero, and both lines would intersect exactly at tap $m$ in the middle of tap $m - 1$ and $m + 1$. A conventional DLL iterates towards this goal. Therefore, ELLI mimics the behavior of a DD-DLL in one shot. As long as tap m is close to the DD set-point, a similar performance can be expected.

3. Quadratic Interpolation (QI): Similar to the frequency bins interpolation, quadratic interpolation of $A[m - 1]$, $A[m]$ and $A[m + 1]$ can be employed.

**Figure 4:** LOS + one MP at -3dB, delay $\in [0, T_c]$, phase $\in [0, \pi]$, identical frequency w.r.t. LOS, tap spacing = $T_c/16$

As a benchmark to compare the MP immunity, we consider the delay estimation error of a DD-DLL with comparable tap spacing in a two-path model, where the LOS is superimposed with a single MP in a stationary scenario. The MP is assumed to be 3dB weaker than the LOS, and it also incurs a uniformly distributed random phase $\in [0, \pi]$, as well as a delay $\in [0, T_c]$, FIGURE 4b shows the resulting delay estimation errors of ELLI, conditioned that tap 0 is biased by 0.12 $\cdot T_c$ for instance. The reference errors of the DD-DLL are shown in FIGURE 4a. Moreover, we can average the error over all MP delays and phases to obtain a mean MP error for each interpolator. FIGURE 4c shows that ELLI approaches the DD-DLL performance in average, although it can react sensitively to the antipodal MP phase. On the other hand, in contrast to conventional DLLs, a one-shot estimator with those interpolators in the last stage cannot result in a consistent estimate with variable initial conditions. In particular, the interpolation error persists with the increasing amount of observation samples, and the remaining error depends on the initial delay estimate that controls the tap 0 timing, as shown by the $\triangle$-periodic pattern of the mean delay errors in FIGURE 4c. Strictly speaking, interpolation in the last stage leads to inconsistent estimators, although the interpolation error is mostly negligible. The primary benefit of a one-shot interpolator over a DLL lies in its superior code tracking agility. This is due to the fact that in the maximum likelihood estimation, each tap is treated equally. Unlike a DLL, there is no need for a specific tap, such as a prompt tap, to sustain the DLL's timing.

Despite all the MP mitigation capabilities and NLOS exclusion methods enabled by SALI, there remains a risk of MP interference, particularly in NLOS scenarios with low Doppler dispersion. To address this, we calculate an MP indicator $\xi$ in each measurement, as the Euclidean distance between the expected spreading code correlation function and the actual obtained correlation values, as shown in STEP 13 of ALGORITHM 1. This enables PE to properly assign weights to individual measurements in the navigation filter.

## MULTIPATH MITIGATION

The MP mitigation capability of SALI can be discussed w.r.t. stochastic characteristics of mobile channels. In particular, the coherence time, Doppler and delay spread play an important role.

The LOS path may be attenuated when it penetrates a medium. Simultaneously, it can be superimposed with MPs from local scatterers. When the delay of the latter is indiscernible relative to the LOS wave for the given signal or RX bandwidth, a Rician faded complex amplitude of $h_0[k]$ arises. Here, a high K-factor corresponds to a dominant LOS component with long coherence distance in general. On the MP side, channel models typically prescribe a Rayleigh fading process with a short coherence distance of several wavelengths, statistically. In real world, however, it's not uncommon to observe specular reflections with long coherence distance that only appears as tail probabilities in channel models. For instance, consider a scenario where a RX is moving in a straight urban canyon with sky-scrapers at both ends. The few visible satellites with low elevation are located either in the front or back of the RX. They may be subject to specular reflections with a relatively long coherence distance. If LOS is obstructed, we may only observe MPs, which can be either Rayleigh faded due to diffuse reflections or Rician faded due to specular reflections.

On the RX side, SALI with a CI length of ~1s can achieve a frequency resolution of about 1Hz, which is 50 $\times$ narrower than that of the 20ms CI. FIGURE 5 illustrates the impact with a simulation of a LOS path plus two specular MPs. All three paths are close to each other in a frequency range of 10Hz, and the LOS path is not the strongest one. The LOS path and one of the MPs have zero frequency error rates while the other MP possesses a frequency error rate of 10Hz/s. This spreads its spectrum $Q_l(f)$ and suppresses its peak. As a result, only two correlation peaks above the detection threshold are visible in the window after 1s CI, although both are merely 1.5Hz apart, as shown in FIGURE 5b. Furthermore, the resulting correlation function after 1s CI encompasses more likely a single $\Lambda(.)$ for each individual path frequency. This facilitates the delay discriminator, especially when the RX bandwidth is sufficiently large. Consequently, an accurate delay estimation can be expected as a result of the clear path separation in the frequency domain. In contrast, the 20ms CI can hardly separate them with the frequency resolution of 50Hz. This complicates the delay discriminator, and the stronger MP can dominate the delay estimation in FIGURE 5a.

**(a)** 20ms CI with long/short MP coh. time  **(b)** 1s CI with long MP coh. time  **(c)** 1s CI with short MP coh. time

**Figure 5:** Correlation in a three-path model with different freq. error rates and MP coh. time

For moving RXs, Doppler spread is inversely proportional to the coherence time, which is directly proportional to the coherence distance, and inversely proportional to the rover speed. Based on the same model as in FIGURE 5b, if we assume diffuse instead of specular reflections, short coherence time arises for MPs. Assuming a rover speed of 50km/h and a coherence distance of 2.5A = 0.5m for L1 carrier frequencies (ITU-R P.681-8 (2015)), we obtain a coherence time of about 36ms. During a 1s CI, the RX should experience roughly 28 uncorrelated realizations of the Rayleigh faded complex amplitude $h_l[k]$ with uniformly distributed phase between 0 and $2\pi$. The sum of those in (4) partially cancels out, given indiscernible delays. As a result, the strong MP power is diminished, as shown in FIGURE 5c. Notably, this effect does not occur with the 20ms CI, because the integration length is too short to experience uncorrelated MPs.

Integrating beyond the lifespans of MPs is particularly beneficial in urban environments, where the LOS signal is received from one side of the street and successive MPs (with short lifespans) are received from the other side. Such scenarios often arise due to reflections from building fronts along the street when a vehicle passes by at low lateral speeds.

**(a)** 20ms CI with short MP coh. time  **(b)** 1s CI with short MP coh. time

**Figure 6:** Correlation in a two-path model including near MPs with short coh. time

The minimal differences in signal power, Doppler, and delay between the LOS and MPs stress delay discriminators utilizing 20ms CI and challenge conventional DLLs, as shown by the distorted peak in FIGURE 6a. In contrast, long CI suppresses uncorrelated MPs, making the LOS correlation peak stand out, and facilitating the delay estimation, as shown in FIGURE 6b. Another similar scenario involves foliage, where the LOS component is attenuated when it penetrates the canopy, yet it remains coherent for a relatively long duration. The leaves and branches within the foliage scatter the impinging waves, resulting in a large amount of MPs with short lifespans.

## ROAD TEST CAMPAIGN AND PERFORMANCE ANALYSIS

Extensive test drives are carried out in Thalwil, Zurich, Munich, Hannover, Frankfurt, New York City (NYC), Detroit, Chicago, etc. Test routes are planned carefully in advance to encompass various environments, including open sky, foliage, suburban, and deep urban areas. A test vehicle is equipped with a GNSS recording box, a consumer-grade IMU and a high-precision GNSS RX aided by a tactical-grade IMU. During test drives, Radio Frequency (RF) signals, the consumer-grade sensor data and vehicle wheel-ticks are recorded synchronously. Simultaneously, data of high-precision positions, velocities and time are logged. They are used as truth in post-processing, to derive all errors of our Devices Under Tests (DUTs). In the lab, recorded RF signals and sensor data are replayed, and fed into identical hardware platforms. The only difference lies in the firmware: one platform runs the SALI-based SF algorithm with ~1s CI, while the other (non-SALI reference) follows the conventional SF implementation with traditional tracking loops based on ≤20ms CI. The performance analysis is conducted in two stages, 1) measurement error analysis followed by 2) position error and integrity analysis. In the first stage, both LOS velocity (Doppler) and Pseudo-Range (PR) errors are analyzed w.r.t. the truth that is derived from the true positions logged during signal recording. The errors are interpreted w.r.t. different speeds and C/N0 values. In the second stage, we additionally consider horizontal position errors and accuracy estimates from the PE to assess the integrity and availability w.r.t. the required position accuracy of two meters. All the measurement and position errors as well as integrity and availability statistics are analyzed for the four pre-defined environment categories.

## MEASUREMENT ERRORS IN ROAD TESTS

Doppler and PR errors of SALI and reference RXs throughout all measurement epochs are grouped into high (> 1m/s) and low rover speed (< 1m/s) categories across all C/N0 values in all road test scenarios. Their Cumulative Distribution Functions (CDFs) are shown in FIGURE 7. In general, Doppler measurements tend to be more accurate at low speeds, as indicated by the

(a) Doppler err. at high/low speeds    (b) PR err. at high/low speeds    (c) Doppler err. at high/low C/N0    (d) PR err. at high/low C/N0

**Figure 7:** CDFs of Doppler and PR errors at different speeds and C/N0 across all test drives

sharper CDFs associated with speeds < 1m/s for both SALI and the reference RX in FIGURE 7a. This can be explained by the lower Doppler spread, which accounts for higher consistency in the LOS Doppler, making the frequency estimation more accurate. However, low speeds diminish the DLL filtering effect against time-variant MPs in conventional tracking loops, and reduce SALI's ability of separating MPs. Consequently, the uncertainty of delays increases in the vicinity of the LOS Doppler, leading to inaccurate delay estimation, as revealed by the flatter CDFs of PR errors associated with speeds < 1m/s in FIGURE 7b. In both speed categories, SALI improves the Doppler and PR measurements, while the gain against conventional tracking loops is larger with high speeds. This analysis is repeated for high and low CN0 values. FIGURE 7c and 7d show a generally more improved Doppler and PR estimation in the C/N0 region of (20, 30)dBHz against (30, 40) dBHz. This can be explained by generally severer MP interference associated with low C/N0, where SALI's MP mitigation stands out more effectively, especially for the Doppler estimation.

In all measurement epochs throughout the entire test campaign, a SALI RX either delivers a measurement with a binary MP warning flag or suppresses the instantaneous measurement due to a raised NLOS flag. For the indicated

(a) PR error of the ref. RX    (b) Doppler error of the ref. RX    (c) PR error of the SALI RX

**Figure 8:** NLOS flag and MP indicator performance across all test drives

NLOS epochs, the CDFs of PR and Doppler errors associated with the conventional SF RX (ref.) are presented in FIGURE 8a and 8b, respectively. The PR errors of the reference RX are almost uniformly distributed, and the Doppler errors' variance is significant, showing the reliability of the NLOS exclusion by SALI. In the remaining epochs, the NLOS flag remains false, and measurements are augmented by the MP warning flag. FIGURE 8c shows the CDFs of PR errors in a SALI receiver, with and without the MP warning flag raised. The sharpness contrast of both curves indicates an effective MP warning. Moreover, the warning flag based on the MP indicator is not restricted to binary values; it can be real-valued. This would allow for soft-decisions in PE. All these features benefit the satellite selection and weighting mechanism in the navigation filter, and enhance the positioning performance indirectly.

## POSITION ERROR, INTEGRITY AND AVAILABILITY STATISTICS IN ROAD TESTS

The measurement and horizontal position errors are all calculated against the truth logged during the test drive. FIGURE 9 shows significantly reduced (sharper CDFs) PR, LOS velocity (Doppler) and horizontal errors by SALI in all MP environments, compared to those in a conventional SF RX. The mountain plot of the CDFs reveals a substantially improved tail probability and

(a) PR error CDF (mountain plot)  (b) Doppler error CDF (mountain plot)  (c) Horizontal error CDF

**Figure 9:** Measurement and position errors in different environments across all test drives

an improved zero-mean property of the error distribution, especially with the Doppler. This indicates the effectiveness of the MP mitigation by SALI. In addition, a series of safety critical metrics are defined based on the absolute value, $\varepsilon$, of the horizontal position error, its estimate, $\hat{\varepsilon}$, and the accuracy requirement $\psi$, which is two meters in our study. The statistics are aggregated over all epochs throughout all test drives, classified for different environments, and presented in TABLE 1. Here, P95 and P68 stand for the 95% and 68% percentile horizontal position error in meters, respectively. The former satisfies $\mathbb{P}(\varepsilon \leq \mathrm{P95}) = 95\%$, and the latter satisfies $\mathbb{P}(\varepsilon \leq \mathrm{P68}) = 68\%$. $\mathrm{P2m} = \mathbb{P}(\varepsilon \leq \psi)$ represents the percentile of horizontal errors ≤2m. The unavailability and availability probability are defined by $P_{\mathrm{U}} = \mathbb{P}(\hat{\varepsilon} > \psi)$ and $P_A$ = 1 - $P_U$, respectively. The Hazardous Misleading Information (HMI) probability is defined by $\mathrm{HMI} = \mathbb{P}(\varepsilon > \psi \mid \hat{\varepsilon} \leq \psi)$. Its complement, 1 - HMI, represents the operational probability. All statistics in MP environments are improved by SALI. The most significant gain shows up in the

**Table 1:** Position error, unavailability and integrity statistics across all test drives

|  | P68 (m) | | P95 (m) | | P2m (%) | | Unavailability (%) | | HMI (%) | |
|---|---|---|---|---|---|---|---|---|---|---|
|  | Ref. | SALI($\pm$) | Ref. | SALI($\pm$) | Ref. | SALI($\pm$) | Ref. | SALI($\pm$) | Ref. | SALI($\pm$) |
| Open sky | 0.8 | 0.9(+0.1) | 1.5 | 1.8(+0.3) | 99 | 96(-3) | 0.0 | 0.3(+0.3) | 1.5 | 3.8(+2.3) |
| Foliage | 6.1 | 0.9(**-5.2**) | 14.5 | 2.1 (**-12.4**) | 22 | 95(**+73**) | 6.8 | 0.2(**-6.6**) | 76.2 | 5.3(**-70.9**) |
| Suburban | 1.2 | 0.9(-0.3) | 3.7 | 2.1(-1.6) | 82 | 95(+13) | 20.3 | 7.7(-12.6) | 8.3 | 2.6(-5.7) |
| Deep urban | 3.3 | 2.1(-1.2) | 15.0 | 4.2(-10.8) | 42 | 63(+21) | 52.1 | 44.5(-7.6) | 34.7 | 25.3(-9.4) |
| All environments | 1.4 | 1.0(-0.4) | 7.1 | 2.7(**-4.4**) | 76 | 90(**+14**) | 16.9 | 10.7(**-6.2**) | 14.9 | 5.7(**-9.2**) |

foliage environment as explained previously, while position error statistics in open sky conditions are marginally degraded due to SALI's sensitivity to high order dynamics. The overall operational probability is improved from 85.2% to 94.3%, as shown by the integrity diagrams in FIGURE 10a.

**(a)** Integrity diagrams across all test drives, SALI v.s. ref.

**(b)** Road test example: Downtown Frankfurt am Main, SALI v.s. ref.

B44 stabilizes the HDOP, is used in SALI receiver, while ruled out due to large PR error in the ref. receiver.

| iTOW 449189 | Ref. | SALI |
|---|---|---|
| B44 Pseudorange (PR) error | 7.7m | 0.8m |
| Used PRs | 6 | 5 |
| Median absolute error of used PRs | 1.4m | 1.3m |
| HDOP | 4.1 | 3.4 |

**(c)** Road test example: NYC, B44 B1C tracking, SALI v.s. ref.

**Figure 10:** Road test results

FIGURE 10b shows a road test example in downtown Frankfurt where the operational probability is significantly enhanced by SALI, because both $\varepsilon$ and $\hat{\varepsilon}$ fall below 2 meters in most epochs. Here, we further classify the operational epochs satisfying $\varepsilon \leq \psi$ and $\hat{\varepsilon} \leq \psi$ into two distinct modes: either the reliable mode (green) when $\varepsilon \leq \hat{\varepsilon}$ is met, or the misleading mode (yellow) when $\varepsilon > \hat{\varepsilon}$ applies.

FIGURE 10c showcases the benefit of SALI with a road test example in NYC, from the PE perspective. Here, upon exiting the urban canyon, the visibility of the constellation, which includes Beidou B1C and Galileo E1, has not fully recovered. On one side of the street, there are still high-rise clusters, and on the other side, foliage introduces a significant penetration loss (and MPs). Consequently, the Horizontal Dilution Of Precision (HDOP) lacks sufficient lateral constraint. In such a scenario, satellites that contribute to the lateral constraint become highly valuable to the positioning solution. Beidou B44 with an elevation angle of about 45° would provide such a constraint if its LOS measurement is regarded as trustworthy by the navigation filter. The challenge is that apparently (at least) two impinging waves reach the antenna with minimal difference in delay and Doppler. Even more challenging is the observation that the LOS path is not the strongest one because foliage penetration loss seemingly exceeds the reflection loss by the building. The conventional RX cannot achieve such a measurement accuracy for B44 to benefit from it in this area, while SALI can resolve the LOS from the MPs, and reduce the PR error from 7.7m to 0.8m. As a result, B44 is included into the position solution. It mitigates the accumulated sensor errors, even when the SALI RX uses one PR measurement less than the reference RX. Consequently, the position fix (green dots) approaches the truth (white squares) more closely compared to the conventional SF fix (red triangles).

## DEGENERATED SALI IN ROAD TESTS

Here, we test the performance of 100ms CI coupled with 1Hz navigation rate in two cases; 1) when IMU fails, an SF RX degrades to a non-SF RX; 2) SF in the navigation filter remains intact while the IMU-aided motion compensation is unavailable in ME. For the first case, an L1-only RX is tested in Hakone (Japan), a hilly area with dense foliage coverage. The test vehicle records live signals in a roundtrip, starting from the northernmost point on the map, proceeding to the southernmost point, and then returning along the same route to the northern point. On one side of the road, a continuous concrete reinforcement wall lines the path. The driving speed is brisk in general, and traffic remains minimal. Both horizontal and vertical positions are plotted in the top and bottom parts of FIGURE 11a and 11b.

(a) Non-SF, ≤20ms CI, Hakone            (b) Non-SF, 100ms CI, Hakone

(c) SF, ≤20ms CI, London                 (d) SF, 100ms CI, London

**Figure 11:** Degenerated SALI in road tests

Results of 100ms CI are compared to the results of reference RXs running conventional tracking loops based on 20ms CI. Both are tested with eleven identical RXs connected to the same replay box. This setup allows us to demonstrate the consistency of the algorithm. A significant improvement in both horizontal and vertical position accuracy is observed with 100ms CI. For the second case, an SF RX is tested in London. Here, the SF navigation filter evaluates measurements from either conventional tracking loops running 20ms CI (FIGURE 11c) or from the degenerated SALI with 100ms CI (FIGURE 11d). No velocity feedback is provided for motion compensation. Either scheme is tested on six RXs to show statistical fluctuation. Certainly, most of the MP damage can already be absorbed by SF. However, once again, it becomes apparent that SF algorithms gain advantages from the 100ms CI. The enhancement in position accuracy is especially evident on street curves and within urban canyon areas, where there is a marked reduction in outlier occurrences, such as the detour by DUT-4482 depicted in the center of FIGURE 11c.

## COMPUTATIONAL AND MEMORY COMPLEXITIES

(a) Total CPU load of the reference SF RX            (b) Total CPU load of the SALI SF RX

**Figure 12:** CPU load comparison on ARM Cortex M3

FIGURE 12 shows the real-time CPU load measurement of a SALI-based SF RX against a conventional SF RX running on an identical hardware platform. The measurement spans from RX power-on to steady-state tracking mode, during which both RXs track an identical number of satellites. Here, the red ribbon specifically indicates the CPU load of MEs running on an ARM Cortex M3. The transition from the non-SALI to SALI mode, triggered by the successful completion of the initial sensor calibration, marks the tracking mode switch from $\leq$20ms CI to ~1s SALI. Clearly, the total computational complexity of the SALI-based PE and ME decreases significantly. The main reason for the load reduction is the discontinuation of high-rate carrier/code tracking loops in each tracking channel, thanks to IMU-aided signal tracking. In contrast, SALI's memory footprint is generally larger than that of conventional tracking loops, as the complex samples have to be stored until the estimator evaluates them. This scales up linearly with the CI length and the number of tracking channels, in general.

## CONCLUSIONS

We have derived SALI and the corresponding LOS estimation scheme from a multipath signal model including both LOS geometry and stochastic channel characteristics. The proposed scheme simplifies the SAGE algorithm to just one iteration, exclusively in the LOS parameter subspace, using the IMU-aided LOS estimates as initial values. This greatly reduces the complexity and enhances the robustness. The achieved multipath mitigation results from two aspects. First, long coherent integration of ~1s, realized by the IMU-aided signal tracking followed by the Gabor transform, provides fine spectral resolution, enabling separation and suppression of the multipaths, leveraging differences of multipath signatures to the LOS. As a result, multipath interference is either confined within specific frequency bins or suppressed by integrating beyond their coherence time due to fading or Doppler rates. Second, any multipath interference falling onto indiscernible frequencies of the LOS is mitigated by the proposed delay interpolator in one step. For channels with minimal Doppler spread, the interpolator approaches the performance of a double-delta DLL without introducing correlation to the previous measurements. The decorrelating property is especially advantageous for integrity calculations. We demonstrated enhanced measurement quality in all challenging environments in road tests, achieving this with substantially lower total computational complexity compared to a conventional sensor fusion RX. The most remarkable performance improvements show up in Rician fading with small K-factors, of which driving on a tree-lined street is an example. Moreover, the proposed NLOS exclusion methods and the multipath indicator exhibit high reliability in road tests. The PEIME close-loop is robust against error propagation in real-world conditions. The backup solution with 100ms coherent integration in the absence of IMU-aided motion compensation also exhibits considerable multipath mitigating capability. In following situations, SALI is not expected to outperform conventional tracking loops w.r.t. position accuracy: 1) specular reflections with hardly discernible delay and Doppler to LOS, e.g. ground reflections, 2) quasi-stationary receiving conditions with minimal Doppler spread, and 3) open-sky conditions, free of multipaths, yet characterized by considerable high order dynamics. The latter can reveal the otherwise neglected error due to unknown Doppler error rates and delay interpolation.

Above all, we have demonstrated that the enhanced measurement quality by SALI translates into significant improvements in position accuracy, integrity and availability, on top of the legacy sensor fusion architecture. This ensures an enhancement of the sensor-aided high-rate positioning solution in e.g. 100Hz. We showcased the effectiveness and robustness of SALI in a real-time GNSS RX operating in realistic conditions of frequency and delay dispersion. Such conditions are common in systems like vehicle navigation and wearable device positioning.

## OUTLOOK

In this paper, all results and performance improvements stem from using a subset of L1 constellations exclusively. We anticipate additional significant benefits when processing L5 wideband signals for the same underlying physics. The frequency domain's multipath separation and suppression will enhance delay estimation at a finer scale for L5, thanks to the upgraded time resolution by the tenfold signal bandwidth. This implies an accuracy boost by SALI on top of L5's inherent multipath resistance. Consequently, we expect positioning performance to meet more stringent requirements than two-meter accuracy, such as decimeter-level precision, even without carrier phase measurements in challenging environments. The small sensor-aided hypothesis window also indicates inherent benefits in anti-spoofing and anti-jamming applications, similar to the advantages in NLOS exclusion.

## REFERENCES

Betz, J. W. and Kolodziejski, K. R. (2009). Generalized Theory of Code Tracking with an Early-Late Discriminator Part II: Noncoherent Processing and Numerical Results. IEEE Transactions on Aerospace and Electronic Systems, 45(4):1557-1564.

Broumandan, A., Nielsen, J., and Lachapelle, G. (2011). Coherent Integration Time Limits for Mobile GNSS Receivers in Multipath Fading Environments. Inside GNSS Magazine, pages 62-65. https://insidegnss.com/wp-content/uploads/2018/01/marapr11-Broumanden.pdf.

Cheng, Z. (2016). Global Navigation Satellite System (GNSS) Signal Tracking. Patent: US11513235, filed Jul. 22, 2016.

Cheng, Z. (2017). Global Navigation Satellite System (GNSS) Signal Tracking. Patent: US11187810, filed Mar. 31, 2017.

Cheng, Z., Giger, K., and Bryant, R. C. (2018). Global Navigation Satellite System (GNSS) Multipath Mitigation. Patent: US11579309, filed May 18, 2018.

Faragher, R., Couronneau, N., Powe, M., Esteves, P., Crockett, M., Martin, H., Ziglioli, E., Higgins, C., and Buckle, D. (2018). Supercorrelation: Enhancing the Accuracy and Sensitivity of Consumer GNSS Receivers with a DSP Upgrade. In Proc. of the 31st International Technical Meeting of the Satellite Division of the Institute of Navigation (ION GNSS+ 2018), pages 357-375, Miami, FL. https://api.semanticscholar.org/CorpusID:69988198.

Faragher, R., Powe, M., Esteves, P., Couronneau, N., Crockett, M., Martin, H., Ziglioli, E., and Higgins, C. (2019). Supercorrelation as a Service: S-GNSS Upgrades for Smartdevices. In Proc. of the 32nd International Technical Meeting of the Satellite Division of the Institute of Navigation (ION GNSS+ 2019), pages 256-274, Miami, FL.

Feder, M. and Weinstein, E. (1988). Parameter Estimation of Superimposed Signals using the EM Algorithm. IEEE Transactions on Acoustics, Speech, and Signal Processing, 36(4):477-489.

Fleury, B., Tschudin, M., Heddergott, R., Dahlhaus, D., and Ingeman Pedersen, K. (1999). Channel Parameter Estimation in Mobile Radio Environments using the SAGE Algorithm. IEEE Journal on Selected Areas in Communications, 17(3):434-450.

Gao, G. and Lachapelle, G. (2008). A Novel Architecture for Ultra-Tight HSGPS-INS integration. Journal of Global Positioning Systems, 7:46-61.

Garin, L. J., van Diggelen, F., and Rousseau, J.-M. (1996). Strobe & Edge Correlator Multipath Mitigation for Code. In Proc. of the 9th International Technical Meeting of the Satellite Division of The Institute of Navigation (ION GPS 1996), Kansas City, MO, pages 657-664. https://api.semanticscholar.org/CorpusID:59696276.

Groves, P., Zhong, Q., Faragher, R., and Esteves, P. (2020). Combining Inertially-aided Extended Coherent Integration (Supercorrelation) with 3D-Mapping-Aided GNSS. In Proc. of the 32nd International Technical Meeting of the Satellite Division of the Institute of Navigation (ION GNSS+ 2020), pages 2327-2346, Virtual conference.

ITU-R P.681-8 (2015). Propagation data required for the design of Earth-space land mobile telecommunication systems. Standard, International Telecommunication Union (ITU), Geneva, CH.

Lehner, A. (2007). Multipath Channel Modelling for Satellite Navigation Systems - Mehrwegekanalmodellierung für Satelliten-navigationssysteme. PhD thesis, University Erlangen and DLR.

Lentmaier, M., Krach, B., and Robertson, P. (2008). Bayesian Time Delay Estimation of GNSS Signals in Dynamic Multipath Environments. International Journal of Navigation and Observation, 2008.

Luo, Y., Hsu, L.-T., and El-Sheimy, N. (2023). A Baseband MLE for Snapshot GNSS Receiver Using Super-Long-Coherent Correlation in a Fractional Fourier Domain. NAVIGATION: Journal of the Institute of Navigation, 70(3). https://navi.ion.org/content/70/3/navi.588.

McGraw, G. A. and Braasch, M. S. (1999). GNSS multipath mitigation using gated and high resolution correlator concepts. In Proc. of the 1999 National Technical Meeting of The Institute of Navigation, San Diego, CA, pages 333-342.

Pany, T., Riedl, B., and Winkel, J. (2009). Coherent Integration Time: The longer, the Better. Inside GNSS Magazine.

https://insidegnss.com/auto/novdec09-wp.pdf.

Schmidt, G. T. and Phillips, R. E. (2010). INS/GPS Integration Architectures. https://api.semanticscholar.org/CorpusID:18288801/.

Schmidt, G. T. and Phillips, R. E. (2011). INS/GPS Integration Architecture Performance Comparisons. https://api.semanticscholar.org/CorpusID:18821037/.

Somieski, A., Hollenstein, C., Favey, E., and Schmid, C. (2010). Low-Cost Sensor Fusion Dead Reckoning using a Single-Frequency GNSS Receiver Combined with Gyroscope and Wheel Tick Measurements. In Proc. of the 23rd International Technical Meeting of the Satellite Division of The Institute of Navigation (ION GNSS 2010), pages 1645-1652, Portland, OR. https://api.semanticscholar.org/CorpusID:60539481.

van Dierendonck, A. J., Fenton, P., and Ford, T. (1992). Theory and performance of narrow correlator spacing in a gps receiver. NAVIGATION: Journal of the Institute of Navigation, Volume 39, Number 3, 39(3):265-284.

van Nee, R. (1992). The Multipath Estimating Delay Lock Loop. In IEEE Second International Symposium on Spread Spectrum Techniques and Applications, pages 39-42.

Xie, P. (2023). Multipath Mitigation. Inside GNSS Magazine. https://insidegnss.com/multipath-mitigation/.

**Claims**

1. A method of processing a GNSS signal received at a receiver, the GNSS signal containing a data message comprising a plurality of data bits, the method comprising:

   obtaining samples of the GNSS signal;
   generating a local carrier signal;
   generating a local spreading code;
   mixing the local carrier signal with the samples to generate carrier-free signal samples;
   correlating the carrier-free signal samples with the local spreading code to generate a complex-valued correlation result;
   wiping off at least one of the data bits from the complex-valued correlation result, to produce a data-free complex-valued correlation result; and
   processing the data-free complex-valued correlation result to produce at least one of: an indication of whether the GNSS signal is detected or not; and a GNSS measurement for the current epoch,
   wherein a carrier phase of the local carrier signal is controlled based on a Doppler estimate for the GNSS signal, wherein the Doppler estimate is based on inertial measurements made at the receiver.

2. The method of claim 1, further comprising detecting a data bit based on the complex-valued correlation result.

3. The method of claim 1, further comprising obtaining a data bit detected at a reference receiver.

4. The method of claim 2 or claim 3, wherein wiping off at least one of the data bits from the complex-valued correlation result is based on the detected data bit.

5. The method of claim 4, comprising:

   identifying a subframe of the data message that is associated with the detected data bit;
   determining that the subframe is not a repeating subframe that has been buffered previously; and
   wiping off the at least one of the data bits from the complex-valued correlation result based on the detected data bit, responsive to said determining.

6. The method of claim 4, comprising:

   identifying a subframe of the data message that is associated with the detected data bit;
   determining a signal quality metric associated with the detected data bit; and

determining that the subframe is not a repeating subframe that has been buffered previously, and that the signal quality metric exceeds a signal quality threshold; and
wiping off the at least one of the data bits from the complex-valued correlation result based on the detected data bit, responsive to said determining.

7. The method of any one of claims 2 to 4, further comprising storing the detected data bit in a buffer.

8. The method of claim 7, comprising:

identifying a subframe of the data message that is associated with the detected data bit;
determining that the subframe is a repeating subframe; and
storing the detected data bit in the buffer, responsive to said determining.

9. The method of claim 7, comprising:

identifying a subframe of the data message that is associated with the detected data bit;
determining a signal quality metric associated with the detected data bit;
determining that the subframe is a repeating subframe and that the signal quality metric exceeds a signal quality threshold; and
storing the detected data bit in the buffer, responsive to said determining.

10. The method of any one of claims 1 to 6, further comprising retrieving a stored data bit from a buffer, wherein wiping off at least one of the data bits from the complex-valued correlation result is based on the retrieved data bit.

11. The method of claim 10, comprising:

identifying a subframe of the data message that is associated with the at least one data bit to be wiped off;
determining that the subframe is a repeating subframe that has been buffered previously; and
wiping off the at least one of the data bits from the complex-valued correlation result based on the retrieved data bit, responsive to said determining.

12. The method of claim 10, comprising:

identifying a subframe of the data message that is associated with the at least one data bit to be wiped off;
determining a signal quality metric;
determining that the subframe is a repeating subframe that has been buffered previously and that the signal quality metric does not exceed a signal quality threshold; and
wiping off the at least one of the data bits from the complex-valued correlation result based on the retrieved data bit, responsive to said determining.

13. The method of any one of the preceding claims, wherein the GNSS measurement comprises a code phase of the GNSS signal, and wherein processing the data-free complex-valued correlation results comprises determining the code phase of the GNSS signal based on the data-free complex-valued correlation results.

14. A computer program comprising computer program code configured to cause one or more physical computing devices to perform all the steps of a method as claimed in any one of the preceding claims when said computer program is run on said one or more physical computing devices.

15. A Global Navigation Satellite System, hereinafter GNSS, receiver, configured to process a GNSS signal, the GNSS receiver comprising a measurement engine configured to:

obtain samples of the GNSS signal;
generate a local carrier signal;
generate a local spreading code;
mix the local carrier signal with the samples to generate carrier-free signal samples;
correlate the carrier-free signal samples with the local spreading code to generate a complex-valued correlation result;
wipe off at least one of the data bits from the complex-valued correlation result, to produce a data-free complex-

**EP 4 542 262 A1**

valued correlation result; and

process the data-free complex-valued correlation result to produce at least one of: an indication of whether the GNSS signal is detected or not; and a GNSS measurement for the current epoch,

wherein a carrier phase of the local carrier signal is controlled based on a Doppler estimate for the GNSS signal, wherein the Doppler estimate is based on inertial measurements made at the receiver.

**35**

FIG. 1

FIG. 2

EP 4 542 262 A1

FIG. 3

EP 4 542 262 A1

FIG. 4

FIG. 5

FIG. 6

FIG. 7

Europäisches
Patentamt

European
Patent Office

Office européen
des brevets

# EUROPEAN SEARCH REPORT

**Application Number**

EP 24 18 5523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/071851 A1 (GRAAS FRANK V [US] ET AL) 6 April 2006 (2006-04-06)<br>* abstract *<br>* figures 2, 3, 20-24 *<br>* paragraphs [0004] - [0006] *<br>* paragraphs [0035] - [0039] *<br>* paragraphs [0042] - [0046] *<br>* paragraphs [0054] - [0064] *<br>* paragraphs [0069] - [0118] *<br>* paragraphs [0145] - [0149] *<br>* paragraphs [0234] - [0237] *<br>----- | 1,2,4-15<br><br>3 | INV.<br>G01S19/24<br>G01S19/26<br><br>ADD.<br>G01S19/25<br>G01S19/29 |
| X<br>Y<br>A | US 2019/011569 A1 (FARAGHER RAMSEY [GB] ET AL) 10 January 2019 (2019-01-10)<br>* abstract *<br>* paragraphs [0008] - [0020] *<br>* paragraphs [0026] - [0039] *<br>* paragraphs [0137] - [0143] *<br>* paragraph [0193] *<br>* paragraph [0241] *<br>----- | 1,2,4,7,<br>10,13-15<br>3<br>5,6,8,9,<br>11,12 | |
| Y | US 2005/116860 A1 (KISHIMOTO NOBUHIRO [JP] ET AL) 2 June 2005 (2005-06-02)<br>* paragraph [0022] *<br>----- | 3 | TECHNICAL FIELDS SEARCHED (IPC)<br><br>G01S |
| A | YANG Y ET AL: "Improving GPS Receiver Tracking Performance of PLL by MEMS IMU Aiding",<br>GNSS 2006 - PROCEEDINGS OF THE 19TH INTERNATIONAL TECHNICAL MEETING OF THE SATELLITE DIVISION OF THE INSTITUTE OF NAVIGATION (ION GNSS 2006), THE INSTITUTE OF NAVIGATION, 8551 RIXLEW LANE SUITE 360 MANASSAS, VA 20109, USA,<br>29 September 2006 (2006-09-29), pages 2192-2201, XP056009808,<br>* the whole document *<br>----- | 1-15 | |

The present search report has been drawn up for all claims

| Place of search | Date of completion of the search | Examiner |
|---|---|---|
| Munich | 16 December 2024 | Haugg, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 542 262 A1

## ANNEX TO THE EUROPEAN SEARCH REPORT
## ON EUROPEAN PATENT APPLICATION NO.

EP 24 18 5523

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | | Publication date | Patent family member(s) | | Publication date |
|---|---|---|---|---|---|
| US 2006071851 | A1 | 06-04-2006 | CA | 2583175 A1 | 28-12-2006 |
| | | | GB | 2435755 A | 05-09-2007 |
| | | | US | 2006071851 A1 | 06-04-2006 |
| | | | WO | 2006137904 A2 | 28-12-2006 |
| US 2019011569 | A1 | 10-01-2019 | CN | 111065937 A | 24-04-2020 |
| | | | EP | 3649486 A1 | 13-05-2020 |
| | | | GB | 2564406 A | 16-01-2019 |
| | | | KR | 20200024239 A | 06-03-2020 |
| | | | US | 2019011569 A1 | 10-01-2019 |
| | | | WO | 2019008327 A1 | 10-01-2019 |
| US 2005116860 | A1 | 02-06-2005 | CN | 1624491 A | 08-06-2005 |
| | | | EP | 1538454 A1 | 08-06-2005 |
| | | | JP | 3806425 B2 | 09-08-2006 |
| | | | JP | 2005164333 A | 23-06-2005 |
| | | | US | 2005116860 A1 | 02-06-2005 |

EPO FORM P0459

For more details about this annex : see Official Journal of the European Patent Office, No. 12/82

## REFERENCES CITED IN THE DESCRIPTION

**Patent documents cited in the description**

- US 11513235 B, Cheng, Z.
- US 11187810 B, Cheng, Z.
- US 11579309 B, Cheng, Z., Giger, K., and Bryant, R. C

**Non-patent literature cited in the description**

- **BETZ, J. W.** ; **KOLODZIEJSKI, K. R**. Generalized Theory of Code Tracking with an Early-Late Discriminator Part II: Noncoherent Processing and Numerical Results.. *IEEE Transactions on Aerospace and Electronic Systems*, 2009, vol. 45 (4), 1557-1564
- **BROUMANDAN, A.** ; **NIELSEN, J.** ; **LACHAPELLE, G.** Coherent Integration Time Limits for Mobile GNSS Receivers in Multipath Fading Environments. *Inside GNSS Magazine*, 2011, 62-65, https://insidegnss.com/wp-content/uploads/2018/01/marapr11-Broumanden.pdf
- **FARAGHER, R.** ; **COURONNEAU, N.** ; **POWE, M.** ; **ESTEVES, P.** ; **CROCKETT, M.** ; **MARTIN, H.** ; **ZIGLIOLI, E.** ; **HIGGINS, C.** ; **BUCKLE, D**. Supercorrelation: Enhancing the Accuracy and Sensitivity of Consumer GNSS Receivers with a DSP Upgrade. *Proc. of the 31st International Technical Meeting of the Satellite Division of the Institute of Navigation (ION GNSS+ 2018)*, 2018, 357-375, https://api.semanticscholar.org/CorpusID:69988198
- **FARAGHER, R.** ; **POWE, M.** ; **ESTEVES, P.** ; **COURONNEAU, N.** ; **CROCKETT, M.** ; **MARTIN, H.** ; **ZIGLIOLI, E.** ; **HIGGINS, C.** Supercorrelation as a Service: S-GNSS Upgrades for Smartdevices. *Proc. of the 32nd International Technical Meeting of the Satellite Division of the Institute of Navigation (ION GNSS+ 2019)*, 2019, 256-274
- **FEDER, M.** ; **WEINSTEIN, E.** Parameter Estimation of Superimposed Signals using the EM Algorithm.. *IEEE Transactions on Acoustics, Speech, and Signal Processing*, 1988, vol. 36 (4), 477-489
- **FLEURY, B.** ; **TSCHUDIN, M.** ; **HEDDERGOTT, R.** ; **DAHLHAUS, D.** ; **INGEMAN PEDERSEN, K.** Channel Parameter Estimation in Mobile Radio Environments using the SAGE Algorithm.. *IEEE Journal on Selected Areas in Communications*, 1999, vol. 17 (3), 434-450
- **GAO, G.** ; **LACHAPELLE, G.** A Novel Architecture for Ultra-Tight HSGPS-INS integration.. *Journal of Global Positioning Systems*, 2008, vol. 7, 46-61
- **GARIN, L. J.** ; **VAN DIGGELEN, F.** ; **ROUSSEAU, J.-M.** Strobe & Edge Correlator Multipath Mitigation for Code. *Proc. of the 9th International Technical Meeting of the Satellite Division of The Institute of Navigation (ION GPS 1996), Kansas City, MO*, 1996, 657-664, https://api.semanticscholar.org/CorpusID:59696276
- **GROVES, P.** ; **ZHONG, Q.** ; **FARAGHER, R.** ; **ESTEVES, P.** Combining Inertially-aided Extended Coherent Integration (Supercorrelation) with 3D-Mapping-Aided GNSS. *Proc. of the 32nd International Technical Meeting of the Satellite Division of the Institute of Navigation (ION GNSS+ 2020)*, 2020, 2327-2346
- Propagation data required for the design of Earth-space land mobile telecommunication systems. Standard. ITU-R P.681-8. International Telecommunication Union (ITU), 2015
- Multipath Channel Modelling for Satellite Navigation Systems - Mehrwegekanalmodellierung für Satelliten-navigationssysteme. **LEHNER, A.** PhD thesis. University Erlangen and DLR., 2007
- **LENTMAIER, M.** ; **KRACH, B.** ; **ROBERTSON, P.** Bayesian Time Delay Estimation of GNSS Signals in Dynamic Multipath Environments. *International Journal of Navigation and Observation*, 2008
- **LUO, Y.** ; **HSU, L.-T.** ; **EL-SHEIMY, N.** A Baseband MLE for Snapshot GNSS Receiver Using Super-Long-Coherent Correlation in a Fractional Fourier Domain. *NAVIGATION: Journal of the Institute of Navigation*, 2023, vol. 70 (3), https://navi.ion.org/content/70/3/navi.588
- **MCGRAW, G. A.** ; **BRAASCH, M. S**. GNSS multipath mitigation using gated and high resolution correlator concepts. *Proc. of the 1999 National Technical Meeting of The Institute of Navigation, San Diego, CA*, 1999, 333-342
- **PANY, T.** ; **RIEDL, B.** ; **WINKEL, J.** Coherent Integration Time: The longer, the Better. *Inside GNSS Magazine*, 2009, https://insidegnss.com/auto/novdec09-wp.pdf.

- **SCHMIDT, G. T.** ; **PHILLIPS, R. E.** *INS/GPS Integration Architectures*, 2010, https://api.semanticscholar.org/CorpusID:18288801/.
- **SCHMIDT, G. T.** ; **PHILLIPS, R. E.** *INS/GPS Integration Architecture Performance Comparisons*, 2011, https://api.semanticscholar.org/CorpusID:18821037
- **SOMIESKI, A.** ; **HOLLENSTEIN, C.** ; **FAVEY, E.** ; **SCHMID, C.** Low-Cost Sensor Fusion Dead Reckoning using a Single-Frequency GNSS Receiver Combined with Gyroscope and Wheel Tick Measurements. *Proc. of the 23rd International Technical Meeting of the Satellite Division of The Institute of Navigation (ION GNSS 2010)*, 2010, 1645-1652, https://api.semanticscholar.org/CorpusID:60539481
- **VAN DIERENDONCK, A. J.** ; **FENTON, P.** ; **FORD, T.** Theory and performance of narrow correlator spacing in a gps receiver. NAVIGATION. *Journal of the Institute of Navigation*, 1992, vol. 39 (3), 265-284
- **VAN NEE, R**. The Multipath Estimating Delay Lock Loop. *IEEE Second International Symposium on Spread Spectrum Techniques and Applications*, 1992, 39-42
- **XIE, P.** Multipath Mitigation. *Inside GNSS Magazine*, 2023, https://insidegnss.com/multipath-mitigation